(19) Europäisches Patentamt
European Patent Office
Office européen des brevets

(11) **EP 4 231 198 A1**

(12) **EUROPEAN PATENT APPLICATION**

(43) Date of publication:
**23.08.2023 Bulletin 2023/34**

(21) Application number: **22157648.1**

(22) Date of filing: **21.02.2022**

(51) International Patent Classification (IPC):
**G06N 3/04** *(2023.01)*        **G06N 3/08** *(2023.01)*

(52) Cooperative Patent Classification (CPC):
**G06N 3/088; G06N 3/0455; G06N 3/094;
H02H 7/04;** G06N 3/084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hitachi Energy Switzerland AG
5400 Baden (CH)**

(72) Inventors:
• **POLAND, Jan
5415 Nussbaumen (CH)**

• **OTTEWILL, James
31-143 Kraków (PL)**
• **CHAKRAVORTY, Jhelum
Montreal, H4A1S8 (CA)**
• **YUAN, Kai
5243 Mülligen, Aargau (CH)**
• **KUK, Edyta
30-633 Krakow (PL)**

(74) Representative: **Vossius & Partner
Patentanwälte Rechtsanwälte mbB
Siebertstraße 3
81675 München (DE)**

(54) **METHOD OF GENERATING A SIGNAL PROCESSING LOGIC, DEVICE FOR CONTROLLING, MONITORING, AND/OR ANALYZING A PHYSICAL ASSET, AND ELECTRIC POWER SYSTEM**

(57)    To generate a signal processing logic (42), machine learning model training is performed, comprising training one or several encoders and one or several decoders. At least one encoder of the trained machine learning may be used for providing the signal processing logic (42) to a device (40) that executes the signal processing logic (42) to control, monitor, and/or analyze the physical asset.

FIG. 1

**Description**

FIELD OF THE INVENTION

Embodiments of the invention relate to systems and methods for generating a signal processing logic, to a device executing the signal processing logic, and to an electric power system. Embodiments of the invention relate in particular to devices and systems operative to process signals including measurements of characteristics of a physical asset or of components connected to the physical asset into one or several features for performing a control, monitoring, and/or analysis operation.

BACKGROUND OF THE INVENTION

There are a number of applications where it is necessary to include protection, monitoring, and/or control systems. Examples of such applications include, amongst others, power system asset health monitoring. Additional examples include power system protection, where protection devices are used to disconnect faulted parts of an electrical network, or process monitoring systems used for identifying anomalous behaviors in an industrial plant which might be indicative of a developing failure.

With an ever increasing number of sensors deployed in modern utility or industrial systems, the identification of features that depend on the sensor measurements and that are meaningful for control, monitoring, and/or analysis decisions is a considerable challenge. While human experts may normally have a good understanding of how some features can be engineered to be meaningful for control, monitoring, and/or analysis purposes, such techniques may be error-prone and may not always result in features that are particularly good, considering the large number of sensor data available.

Computer-aided techniques have been employed for control, monitoring, and/or analysis purposes in utility or industrial automation systems. For illustration, various methods may be used for analyzing time series data for monitoring purposes. In recent years recurrent neural networks (RNNs) have grown in popularity. RNNs allow machine learning (ML) models to be trained to detect a specific event or situation in a classification training setup, with a training set comprised of an input time series and desired output at each time step.

The use of computer-aided techniques for generating features that can be used as a basis for control, monitoring, and/or analysis purposes may suffer from various challenged. For illustration, it is challenging to provide computer-aided techniques that generate features that are associated with, and useful for describing, different temporal, spatial, or logical aspects of a physical asset, its operation, health, and/or degradation.

SUMMARY

There is a need in the art for enhanced methods and systems for automatically or semi-automatically generating a signal processing logic that can be executed by a device to control, monitor, and/or analyze a physical asset. There is also a need in the art for enhanced devices, methods, and systems that control, monitor, and/or analyze a physical asset. For illustration, there is a need for methods and systems that may be operative to generate a signal processing logic that processes a series of input signals into one or several features, which reflect characteristics of the physical asset on different temporal and/or spatial and/or logical (e.g., hierarchical) scales.

According to exemplary embodiments the invention, methods, devices, and systems as recited in the independent claims are provided. The dependent claims define preferred embodiments.

Methods and systems according to embodiments are operative to generate or update a signal processing logic by training one or several ML model(s) that comprises one or several encoders and one or several decoders. At least an encoder and/or a decoder of the trained ML model may be executed using at least one integrated circuit for processing signals including measurements associated with a physical asset for performing control, monitoring, and/or analysis function. Optionally, both the encoder and the decoder of the trained ML model may be executed using at least one integrated circuit for processing signals including measurements associated with a physical asset for performing control, monitoring, and/or analysis function.

Training of the ML model may be performed in a manner that ensures a separation of latent features of a code generated by the encoder of the autoencoder according to one or several characteristics. The separation may be a separation according to different time domains (e.g., into one or several first latent features that vary over a slower first timescale that represents a sub-sampling of a second timescale over which one or several second latent features vary). The separation may be a separation according to different spatial domains (e.g., into one or several first latent features that vary over a first spatial scale that is greater than a second spatial scale over which one or several second latent features vary). The separation may be a separation according to different logical domains.

An architecture of the ML model that is being trained may be set up so as to provide a desired feature separation.

The autoencoder may be operative such that some latent features of a code generated by an encoder are updated more frequently than other latent features. For illustration, a first set of latent features may be updated whenever new input is fed to the encoder (e.g., at a time interval that corresponds to a sampling interval of measurements), while a second set of latent features is updated only at an integer multiple of that time. Several different encoders of the ML model may comprise different machine learning (ML) architectures, with a first ML part providing a first set of latent features that is updated more frequently than a second set of latent features that is provided by a second ML part.

A separation of latent features in accordance with various temporal, spatial, and/or logical domains may be attained by implementing the ML model training to ensure the separation. The training may be implemented in such a way that the way in which the latent features included in the second set of latent features (that is updated less frequently) depends on the input in a manner that is automatically learned, while providing suitable information on characteristics that vary slowly on a temporal and/or spatial scale.

In some implementations, an adversarial decoder training may be performed in which a decoder of the ML model (e.g., of an autoencoder) and an adversarial decoder of the ML model (e.g., of the autoencoder) are trained in parallel. This may be done in an iterative technique. Only a sub-set of the latent features included in the code generated by the encoder of the autoencoder may be supplied as decoder input to the adversarial decoder. For illustration, only latent features that vary more slowly (on a temporal and/or spatial scale) than other latent features may be fed to the adversarial decoder.

Alternatively or additionally, signals that influence operation of the physical asset but that are independent of the physical asset operation may be treated differently from signals that are dependent of the physical asset operation. For illustration, signals that influence the operation of the physical asset may be fed to both the encoder and the decoder part of the autoencoder during autoencoder training.

The ML model training may respectively be performed such that an objective function is minimized or maximized.

The objective function may be or may comprise a loss function.

The objective function may be or may comprise a reconstruction loss or prediction loss.

The objective function may be or may comprise loss quantifying (e.g., using a metric or a loss function) a difference between the signals input to the encoder of the autoencoder and reconstructions of the signals output by the decoder of the ML model.

The methods and systems may be used in association with a physical asset control in an electric power system and/or asset health monitoring for electric power system assets. The methods and systems may be used in association with power transformer health monitoring or control. The methods and systems may be used more broadly in association with asset monitoring and control.

According to an embodiment, there is provided a method of generating or updating a signal processing logic for processing signals, in particular time-series signals, that comprise measurements associated with a physical asset. The method comprises training, using at least one integrated circuit, a machine learning (ML) model. The ML model comprises:

> a first encoder having a first input layer to receive input signals, in particular time-series input signals, the first encoder being operative to generate a first code comprising first latent features,
> at least one second encoder having at least one second input layer to receive the input signals, the at least one second encoder being operative to generate at least one second code comprising second latent features,
> a first decoder having an output layer, the first decoder being operative to process first decoder inputs to generate a first decoder output, and
> at least one second decoder having at least one second output layer, the at least one second decoder being operative to process second decoder inputs to generate a second decoder output

Training the ML model may comprise providing training signals as the input signals to the first input layer and the second input layer, generating the first decoder inputs from at least some first latent features included in the first code, and generating the second decoder inputs from at least some second latent features included in the at least one second code, and

The method may further comprise providing at least one of the first or second encoders and/or at least one of the first or second decoders of the trained ML model as at least part of a signal processing logic to a device that executes the signal processing logic to control, monitor, and/or analyze the physical asset.

Generating the first decoder inputs may comprise generating the first decoder inputs from the first code and from additional signals that may comprise at least some second latent features included in the at least one second code.

The first latent features and the second latent features may vary on different time scales.

The first latent features may vary over a slower time scale than at least some of the second latent features.

Training the ML model may comprise performing an iterative training comprising several iterations, each of the several iterations respectively comprising: training the first encoder, the first decoder, and the at least one second encoder with objectives of minimizing a loss function (such as a reconstruction loss or prediction loss) of the first decoder and maximizing a loss function (such as a reconstruction loss or prediction loss) of the at least one second decoder.

Training the ML model may comprise training the at least one second decoder with an objective of minimizing a loss function (such as a reconstruction loss or prediction loss) of the at least one second decoder.

The loss functions used for the training steps (e.g., the loss function of the at least one second decoder used for training the first encoder, the first decoder, and the at least one second encoder and the loss function of the at least one second decoder used for training the at least one second decoder) may be the same or different.

The loss functions may be a reconstruction or prediction loss.

The ML model may comprise or may be at least one autoencoder.

The first decoder outputs may comprise a first reconstruction of at least some of the input signals.

The second decoder outputs may comprise a second reconstruction of at least some of the input signals.

The additional signals may comprise variables that influence operation of the physical asset but exist independently of the presence or absence of the physical asset.

The additional signals may comprise variables measured at a first sampling time that is longer than a second sampling time at which the measurements are sampled.

The additional signals may comprise ambient condition variables of the physical asset.

The ambient condition variables may comprise weather data that affect at least one power system characteristic associated with the physical asset.

The first decoder inputs may comprise replicas of at least some of the second latent features included in the at least one second code.

One or several of the first latent variables represent temporal characteristics relating to the physical asset.

The one or several first latent variables of the trained first encoder represent temporal characteristics that may vary over a first timescale that is longer than sampling time intervals of one, several, or all of the measurements.

The first timescale is a sub-sampling of the sampling time intervals.

The device processes one or several of the first latent variables to perform an asset health analysis for the physical asset.

According to an aspect of the invention, which may be used in combination or independently of the above-disclosed aspect, a method of generating or updating a signal processing logic for processing signals that comprise measurements associated with a physical asset is provided. The method comprises training a ML model. The ML model comprises an encoder having an input layer to receive input signals, in particular time-series input signals. The encoder is operative to generate a code comprising latent features. The ML model comprises a decoder having an output layer. The decoder is operative to process decoder inputs comprising the code to generate a decoder output. Training the autoencoder may comprise providing training signals as the input signals to the input layer.

Training the ML model may comprise generating the decoder inputs from the code and, optionally, from additional signals different from the code.

The decoder output may comprise a reconstruction of at least some of the input signals.

The input signals may be or may comprise offline signals that may be retrieved from a data repository.

The input signals may be or may comprise online signals received from field devices (e.g., when updating a signal processing logic during field use).

The method may comprise providing (e.g., by storing or transferring) at least the encoder and/or the decoder of the trained ML model as signal processing logic to a device that executes the signal processing logic to control, monitor, and/or analyze the physical asset.

The method may comprise providing (e.g., by storing or transferring) at least the decoder of the trained ML model as signal processing logic to a device that executes the signal processing logic to control, monitor, and/or analyze the physical asset.

The method may comprise enforcing the separation of latent features into at least two groups. The method may comprise adversarial decoder training.

In the adversarial decoder training, only part of the code may be provided to an adversarial decoder input layer of an adversarial decoder.

Enforcing the separation of latent features into at least two groups may comprise treating signals differently depending on whether they vary more rapidly or more slowly.

Enforcing the separation of latent features into at least two groups may comprise supplying signals that are sampled at a lower rate than other signals (such as weather data) to both the input layer of the encoder and a decoder input layer of the decoder during ML model training.

The method may be performed by or using at least one integrated circuit (IC).

The method may be a computer-implemented method.

The signals may be time-series signals.

The additional signals may comprise second latent features included in a second code generated using a second encoder.

The ML model may comprise the second encoder.

Training the ML model may comprise training the second encoder.

Training the ML model may comprise performing an adversarial training of the decoder and of a second decoder.

The second decoder may be operative to process second decoder inputs to generate a second decoder output.

The second decoder output may comprise a second reconstruction of at least some of the signals.

Performing the adversarial training may comprise providing only a sub-set of latent features included in the code to the second decoder as second decoder inputs.

The sub-set of latent features may be selected based on a timescale over which the latent features vary.

The sub-set may include latent features that are updated by the encoder less frequently than other latent features.

Alternatively or additionally, the sub-set of latent features may be selected based on a spatial scale over which the latent features vary.

Alternatively or additionally, the sub-set of latent features may be selected based on a logical stage with which the latent features are associated.

Training the ML model may comprise performing an iterative training comprising several iterations.

Each of the several iterations may respectively comprise training the encoder, the decoder, and the second encoder with objectives of minimizing a loss function (such as a reconstruction loss or prediction loss) of the decoder and maximizing a loss function (such as a reconstruction loss or prediction loss) of the second decoder; and training the second decoder with an objective of minimizing a loss function (such as a reconstruction loss or prediction loss) of the second decoder.

The encoder may comprise an encoder output layer operative to output a first set of latent features at a first rate.

The second encoder may comprise a second encoder output layer operative to output a second set of latent features at a second rate different from the first rate.

The second rate may be less than the first rate such that latent features included in the second set are updated less frequently than latent features included in the first set.

The sub-set of latent features may include only latent features taken from the second set

The ML model training may comprise adjusting parameters of at least one artificial neural network (ANN), such as weights and/or forwarding functions.

The ML model training may comprise adjusting parameters of at least one artificial neural network (ANN) to minimize an objective function and/or maximize another objective function.

The ML model training may comprise adjusting parameters of at least one recurrent neural network (RNN), such as weights and/or forwarding functions.

The ML model training may comprise adjusting parameters of at least one recurrent neural network (RNN) to minimize an objective function and/or maximize another objective function.

The ML model training may comprise adjusting parameters of at least one gated recurrent unit (GRU) or long-short-term memory (LSTM) cell, such as weights and/or biases.

The ML model training may comprise adjusting parameters of at least one gated recurrent unit (GRU) or long-short-term memory (LSTM) cell, such as weights and/or biases, to minimize an objective function and/or maximize another objective function.

The objective function may be dependent on a loss function (such as a reconstruction loss or prediction loss).

The objective function may be dependent, e.g., on a metric of a difference between encoder inputs and decoder outputs or an entropy function.

The adversarial training may maximize or minimize a loss function that depends on the training signals, the decoder output, and the second decoder output.

The loss function may comprise a distance determined according to a metric, an entropy measure, a distance measure of probability distributions.

The adversarial training may be an iterative training comprising several iterations in which the decoder and the second decoder are sequentially trained in each of the several iterations.

The additional signals may comprise variables that influence operation of the physical asset but exist independently of the presence or absence of the physical asset.

The additional signals may vary over a timescale that is slower than an operational timescale of the physical asset.

The additional signals may comprise variables measured at a first sampling time that is longer than a second sampling time at which the measurements are sampled.

The first sampling time may be a sub-sampling of the second sampling time.

The additional signals may comprise ambient condition variables of the physical asset.

The ambient condition variables may comprise weather data that affect at least one power system characteristic associated with the physical asset.

The decoder input may comprise replicas of at least some of the latent features of a second code generated by a second encoder.

The decoder input may comprise replicas of latent features of a second code generated by a second encoder and that vary over a slower timescale than other latent features.

The code may comprise a N-dimensional tensor.

N may be three or greater than three.

The N-dimensional tensor may be defined in a space having a first time axis and a second time axis, the first time axis representing changes relating to the physical asset over a first timescale and the second time axis representing changes relating to the physical asset over a second timescale, the first timescale being different from the second timescale.

A last stage of the encoder may map a series into a vector.

The last stage of the encoder may be operative to update some vector elements of the vector more frequently than other vector elements of the vector.

The encoder may have an encoder output layer operative to output a first set of latent features at a first rate and a second set of latent features at a second rate different from the first rate.

The first rate may be an integer multiple of the second rate.

Training the ML model may comprise generating replicating every latent feature included in the second set along a time axis.

Training the ML model may comprise generating the decoder input, during training, including combining (e.g., concatenating) replicas of the latent features included in the second set with features included in the first set.

One or several of the latent variables may represent temporal characteristics relating to the physical asset.

The one or several latent variables of the trained ML model may represent temporal characteristics that vary over a first timescale that is longer than sampling time intervals of one, several, or all of the measurements.

The first timescale may be a regular or irregular sub-sampling of the sampling time intervals.

The device may process the one or several latent variables to perform an asset health analysis for the physical asset.

One or several latent variables of the trained ML model may represent spatial and/or logical characteristics.

The method may further comprise training at least one additional encoder and/or decoder to engineer features for three or more than three different temporal, spatial, and/or logical domains.

The method may further comprise performing an adversarial training of adversarial decoders.

The encoder of the ML model may comprise a first ANN. The first ANN may be operative to process a series of signals (such as a time-series) into at least one vector. The first ANN may comprise a recurrent neural network (RNN), in particular a gated recurrent unit (GRU) and/or long-short term memory (LSTM) cell. The encoder of the autoencoder may comprise a first ANN.

The decoder of the ML model may comprise a second ANN.

An adversarial (i.e., second) decoder, if used, may comprise a third ANN.

A topology of the first, second, and, if present, third ANN (e.g., RNN) may be invariable during the ML model training.

Alternatively, the ML model training may comprise varying one or several hyperparameters defining a topology of at least one or several of the first, second, and, if present, third ANN.

The signals used for training in the method may comprise historical measurements.

The signals used for training in the method may comprise labeled historical measurement data.

The method of any one of the embodiments or aspects disclosed herein may be performed for commissioning an automation system for a utility or industrial system, e.g., for an electric power generation, transmission, and/or distribution system.

The method of any one of the embodiments or aspects disclosed herein may be performed for configuring an automation system for a utility or industrial system, e.g., for an electric power generation, transmission, and/or distribution system.

The method of any one of the embodiments or aspects disclosed herein may be performed for updating a signal processing logic of a device of an automation system for a utility or industrial system during field operation.

The method of any one of the embodiments or aspects disclosed herein may comprise monitoring a device that controls, monitors, and/or analyzes a physical asset, during field operation of the device.

The method of any one of the embodiments or aspects disclosed herein may comprise selectively replacing a logic executed by the device depending on a performance of the device during field operation.

The physical asset may be or may comprise at least one power transformer, disconnector, tap changer, converter (e.g., AC/DC converter), etc.

According to another aspect of the invention, a method of generating or updating a signal processing logic for processing signals that comprise measurements associated with a physical asset is provided. The method comprises training a ML model. The ML model comprises an encoder having an input layer to receive input signals, in particular time-series input signals. The encoder is operative to generate a code comprising latent features. The ML model comprises a decoder having an output layer. The decoder is operative to process decoder inputs comprising the code to generate an decoder output that may comprise a reconstruction of at least some of the input signals. Training the ML model comprises providing training signals as the input signals to the input layer. Training the ML model comprises enforcing a separation of latent features into at least two groups, wherein one or several latent feature(s) included in a first group of latent features are associated with a first timescale and/or spatial scale and one or several latent feature(s) included in a second group of latent features are associated with a second timescale and/or spatial scale that is different from the first temporal and/or spatial scale.

The encoder may have an encoder output layer operative to output a first set of latent features at a first rate and a second set of latent features at a second rate different from the first rate.

The first rate may be an integer multiple of the second rate.

Training the ML model may comprise generating replicating every latent feature included in the second set along a time axis.

Training the ML model may comprise generating the decoder input, during training, including combining (e.g., concatenating) replicas of the latent features included in the second set with features included in the first set.

Enforcing the separation of latent features into at least two groups may comprise adversarial decoder training.

In the adversarial decoder training, only part of the code (e.g., only latent features included in the second set of latent features) may be provided to an adversarial decoder input layer of an adversarial decoder.

Enforcing the separation of latent features into at least two groups may comprise treating signals differently depending on whether they vary more rapidly or more slowly.

Enforcing the separation of latent features into at least two groups may comprise supplying signals that are sampled at a lower rate than other signals (such as weather data) to both the input layer of the encoder and a decoder input layer of the decoder during ML model training.

The method may comprise providing (e.g., by storing or transferring) at least the encoder of the trained ML model as signal processing logic to a device that executes the signal processing logic to control, monitor, and/or analyze the physical asset.

The method may be performed by or using at least one integrated circuit (IC).

The method may be a computer-implemented method.

The signals may be time-series signals.

The additional signals may comprise a second code generated using a second encoder.

Training the ML model may comprise performing an adversarial training of the decoder and of a second decoder.

The second decoder may be operative to process second decoder inputs to generate a second decoder output.

The second autoencoder output may comprise a second reconstruction of at least some of the signals.

Performing the adversarial training may comprise providing only a sub-set of latent features included in the code to the second decoder as second decoder inputs.

The sub-set of latent features may be selected based on a timescale over which the latent features vary.

Alternatively or additionally, the sub-set of latent features may be selected based on a spatial scale over which the latent features vary.

Alternatively or additionally, the sub-set of latent features may be selected based on a logical stage with which the latent features are associated.

Training the ML model may comprise performing an iterative training comprising several iterations.

Each of the several iterations may respectively comprise training the encoder, the decoder, and the second encoder with objectives of minimizing a loss function (such as a reconstruction loss or prediction loss) of the decoder and maximizing a loss function (such as a reconstruction loss or prediction loss) of the second decoder; and training the second decoder with an objective of minimizing a loss function (such as a reconstruction loss or prediction loss) of the second decoder.

The encoder may comprise an encoder output layer operative to output a first set of latent features at a first rate.

The second encode may comprise a second output layer operative to output a second set of latent features at a second rate different from the first rate.

The second rate may be less than the first rate such that latent features included in the second set are updated less frequently than latent features included in the first set, and wherein the sub-set of latent features includes only latent features taken from the second set.

The ML model training may comprise adjusting parameters of at least one artificial neural network (ANN), such as weights and/or forwarding functions.

The ML model training may comprise adjusting parameters of at least one artificial neural network (ANN) to minimize an objective function and/or maximize another objective function.

The ML model training may comprise adjusting parameters of at least one recurrent neural network (RNN), such as weights and/or forwarding functions.

The ML model training may comprise adjusting parameters of at least one recurrent neural network (RNN) to minimize an objective function and/or maximize another objective function.

The ML model training may comprise adjusting parameters of at least one gated recurrent unit (GRU) or long-short-term memory (LSTM) cell, such as weights and/or biases.

The ML model training may comprise adjusting parameters of at least one gated recurrent unit (GRU) or long-short-term memory (LSTM) cell, such as weights and/or biases, to minimize an objective function and/or maximize another objective function.

The objective function may be dependent on a loss function (such as a reconstruction loss or prediction loss).

The objective function may be dependent on a reconstruction loss, e.g., on a metric of a difference between autoencoder inputs and autoencoder outputs or an entropy function.

The adversarial training may maximize or minimize a loss function that depends on the training signals, the autoencoder output, and the second autoencoder output.

The loss function may comprise a distance determined according to a metric, an entropy measure, a distance measure of probability distributions.

The adversarial training may be an iterative training comprising several iterations in which the decoder and the second decoder are sequentially trained in each of the several iterations.

The additional signals may comprise variables that influence operation of the physical asset but exist independently of the presence or absence of the physical asset.

The additional signals may vary over a timescale that is slower than an operational timescale of the physical asset.

The additional signals may comprise variables measured at a first sampling time that is longer than a second sampling time at which the measurements are sampled.

The first sampling time may be a sub-sampling of the second sampling time.

The additional signals may comprise ambient condition variables of the physical asset.

The ambient condition variables may comprise weather data that affect at least one power system characteristic associated with the physical asset.

The decoder input may comprise replicas of at least some of the latent features of the code.

The decoder input may comprise replicas of latent features that vary over a slower timescale than other latent features.

The code may comprise a N-dimensional tensor.

N may be three or greater than three.

The N-dimensional tensor may be defined in a space having a first time axis and a second time axis, the first time axis representing changes relating to the physical asset over a first timescale and the second time axis representing changes relating to the physical asset over a second timescale, the first timescale being different from the second timescale.

A last stage of the encoder may map a series into a vector.

One or several of the latent variables may represent temporal characteristics relating to the physical asset.

The one or several latent variables of the trained ML model may represent temporal characteristics that vary over a first timescale that is longer than sampling time intervals of one, several, or all of the measurements.

The first timescale may be a sub-sampling of the sampling time intervals.

The device may process the one or several latent variables to perform an asset health analysis for the physical asset.

One or several latent variables of the trained ML model may represent spatial and/or logical characteristics.

The method may further comprise training at least one additional encoder and at least one additional decoder to engineer features for three or more than three different temporal, spatial, and/or logical domains.

The method may further comprise performing an adversarial training of adversarial decoder stages.

The encoder of the ML model may comprise a first ANN. The first ANN may be operative to process a series of signals (such as a time-series) into at least one vector. The first ANN may comprise a recurrent neural network (RNN), in particular a gated recurrent unit (GRU) and/or long-short term memory (LSTM) cell. The encoder of the ML model may comprise a first ANN.

The decoder of the ML model may comprise a second ANN.

An adversarial decoder, if used, may comprise a third ANN.

A topology of the first, second, and, if present, third ANN may be invariable during the ML model training.

Alternatively, the ML model training may comprise varying one or several hyperparameters defining a topology of at least one or several of the first, second, and, if present, third ANN.

The signals used for training in the method may comprise historical measurements.

The signals used for training in the method may comprise labeled historical measurement data.

The method may be performed for commissioning an automation system for a utility or industrial system, e.g., for an electric power generation, transmission, and/or distribution system.

The method may be performed for configuring an automation system for a utility or industrial system, e.g., for an electric power generation, transmission, and/or distribution system.

The method may be performed for updating a signal processing logic of a device of an automation system for a utility or industrial system during field operation.

The method may comprise monitoring a device that controls, monitors, and/or analyzes a physical asset, during field operation of the device.

The method may comprise selectively replacing a logic executed by the device depending on a performance of the device during field operation.

The physical asset may be or may comprise at least one power transformer, disconnector, tap changer, converter (e.g., AC/DC converter), etc.

A method of controlling, analyzing, and/or monitoring a physical asset comprises executing, by a control, analysis, and/or monitoring device, an encoder of a trained ML model (e.g., autoencoder) as at least part of a signal processing logic to process signals, in particular time-series signals, comprising measurements, and/or executing, by a control, analysis, and/or monitoring device, a decoder of a trained ML model (e.g., autoencoder) as at least part of a signal processing logic.

The signal processing logic may process the signals into latent features. The latent features may include latent features that associated with at least two different temporal, spatial, and/or logical domains.

The method may comprise performing at least one control, analysis, and/or monitoring operation based on at least a sub-set of the latent features.

The method may comprise performing at least one control, analysis, and/or monitoring operation based on a sub-set of the latent features and independently of the remaining features generated by the signal processing logic.

The signal processing logic may be the signal processing logic generated using the method according to an embodiment.

The method may comprise performing, by the control, analysis, and/or monitoring device, at least one control operation based on one or several of the latent features.

The at least one control operation may comprise one or several of: triggering a protection function, controlling an interface to perform an output operation, controlling at least one operation parameter of the physical asset, controlling at least one operation parameter of a power system asset different from the physical asset.

The physical asset may be a power system asset.

The method may be a method of monitoring an asset health of at least one power system asset, e.g., at least one power transformer, disconnector, tap changer, converter (e.g., AC/DC converter), etc.

The method may be a method of controlling at least one power system asset, e.g., at least one power transformer, disconnector, tap changer, converter (e.g., AC/DC converter), etc.

A method of automatically engineering features for controlling, analyzing, and/or monitoring a physical asset is provided. The method comprises training a ML model comprising an encoder and a decoder and using at least an encoder of the trained ML model to process signals into latent features for controlling, analyzing, and/or monitoring a physical asset.

The encoder may be generated by the method of generating a signal processing logic according to an embodiment.

According to an aspect of the invention, a computing system for generating or updating a signal processing logic for processing signals that comprise measurements associated with a physical asset is provided. The computing system comprises at least one integrated circuit operative to train a ML model using any one of the techniques disclosed herein.

A control, analysis, and/or monitoring device for a physical asset comprises an interface to receive signals, in particular time-series signals, that comprise measurements associated with the physical asset. The device may comprise at least one integrated circuit operative to process the signals using an encoder (e.g., of an autoencoder), wherein the encoder has an input layer to receive the signals, the encoder being operative to generate a code comprising latent features; and perform at least one control operation based on one or several of the latent features. Alternatively or additionally, the device may comprise at least one integrated circuit operative to process the signals using a decoder (e.g., of an autoencoder) and perform at least one control operation based on signal processing performed using the decoder.

The signal processing logic may be generated by the method according to any embodiment disclosed herein.

The encoder may be or may comprise the first and/or second encoder of the ML model that is trained in the method of generating a signal processing logic.

The decoder may be or may comprise the first and/or second decoder of the ML model that is trained in the method of generating a signal processing logic.

The asset may be a power system asset.

An electric power system comprises a physical asset, at least one measurement device operative to capture signals associated with the physical asset, and the control, analysis, and/or monitoring device for processing the captured signals.

The control, analysis, and/or monitoring device may be an Intelligent Electronic Device, IED.

The physical asset may be or may comprise at least one power transformer, disconnector, tap changer, converter (e.g., AC/DC converter), etc.

Various effects and advantages are attained by the methods, systems, and devices according to embodiments. A signal processing logic can be automatically generated or updated. The signal processing logic can be executed by an intelligent electronic device (IED) to automatically take decisions that may include triggering a control action, outputting a monitoring report, and/or outputting an analysis result (such as an alarm). The signal processing logic provides latent features that are different from other latent features with regard to their temporal and/or logical domain (e.g., that vary more slowly than a sampling time of the measurements processed by the signal processing logic).

BRIEF DESCRIPTION OF THE DRAWINGS

The subject-matter of the invention will be explained in more detail with reference to preferred exemplary embodiments which are illustrated in the attached drawings, in which:

Figure 1 is a schematic representation of a system comprising a device operative to control, monitor, and/or analyze a power system asset, and a computing system for generating a signal processing logic.

Figure 2 is a schematic representation of a system comprising a device operative to control, monitor, and/or analyze a power system asset, and a computing system for generating a signal processing logic.

Figure 3 is a flow chart of a method.

Figure 4 is a flow chart of a method.

Figure 5 is block diagram of an autoencoder.

Figure 6 is a flow chart of a method.

Figure 7 is a block diagram of an autoencoder system comprising an adversarial decoder.

Figure 8 is block diagram of an autoencoder.

Figure 9 is a block diagram of an autoencoder system comprising an adversarial decoder.

Figure 10 is a diagram illustrating operation of methods, devices, and systems.

Figures 11-15 are diagrams illustrating operation of parts of the autoencoder.

Figure 16 is block diagram of an autoencoder for illustrating autoencoder training.

Figure 17 is block diagram of an autoencoder for illustrating autoencoder training.

Figure 18 is block diagram of an autoencoder system for illustrating autoencoder training.

Figure 19 is block diagram of an autoencoder system for illustrating autoencoder training.

Figure 20 is a diagram showing a time evolution of a latent feature determined by a signal processing logic generated according to an embodiment.

Figure 21 is a diagram showing a time evolution of a latent feature determined by a conventional signal processing logic that is not trained according to an embodiment.

Figure 22 is block diagram of an autoencoder system for illustrating autoencoder training.

Figure 23 is block diagram of an autoencoder system for illustrating autoencoder training.

Figure 24 is a schematic representation of a signal processing logic.

Figure 25 is a block diagram of a system comprising a device operative to control, monitor, and/or analyze a power system asset, and a computing system for updating a signal processing logic.

Figure 26 is a schematic representation of an encoder.

Figure 27 is a schematic representation of an encoder.

Figure 28 is a flow chart of a method.

Figure 29 is a flow chart of a method.

DETAILED DESCRIPTION OF EMBODIMENTS

Exemplary embodiments of the invention will be described with reference to the drawings in which identical or similar reference signs designate identical or similar elements. While some embodiments will be described in the context of distance protection or time domain protection of a power distribution or transmission systems, the methods and devices described in detail below may be used in a wide variety of systems.

The features of embodiments may be combined with each other, unless specifically noted otherwise.

While some embodiments are described in association with a signal processing logic executed by a monitoring device for asset health monitoring, the embodiments are not limited thereto. Embodiments of the invention can be generally employed for systems that require features to be engineered.

The systems, methods, and devices address challenges related to processing signals (such as time-series signals) for generating features that are used to base a decision relating to a physical asset thereon. The decision may be triggering a corrective or protective action related to the physical asset and/or determining an asset health, without being limited thereto.

As used herein, the term "signals" is not limited to signals that are received in an ongoing manner (e.g., on an ongoing basis, i.e., continually) during field use. The "signals" may be or may comprise online signals that are processed during live operation of an asset that is being controlled, monitored, and/or analyzed and/or signals that have previously been recorded and may have been stored in a storage system. This applies to both the signals that are used when generating a signal processing logic and the signals that are used to perform an action in field use.

As used herein, the ML model will sometimes also be referred to as autoencoder, without being limited thereto.

Recurrent neural networks (RNNs) may be trained to classify samples in one or several data series, for example. Identifying (or engineering) features from input signals that comprise one or several measurements related to the physical asset remains a considerable challenge.

Embodiments of the invention provide techniques that allow a signal processing logic to be generated or updated automatically or semi-automatically. The signal processing logic is executed by at least one integrated circuit to operate, monitor, and/or analyze the physical asset, responsive to input signals that include measurements of electrical or other characteristics associated with the physical asset.

Embodiments of the invention utilize ML model (e.g., autoencoder) training for feature engineering. At least the encoder of the trained ML model may be used as a signal processing logic during field operation of the physical asset. The ML model training may be implemented in a manner which ensures that latent features included in a code output by an encoder of the autoencoder include first latent features associated with a first (spatial, temporal, spatio-temporal, logical or other) characteristic scale and second features associated with a second (spatial, temporal, spatio-temporal, logical or other) characteristic scale different from the first characteristic scale.

In some implementations, the ML model training is performed in such a manner that latent features included in the code output by the encoder of the autoencoder include one or several first latent features that vary over a first timescale and one or several second latent features that vary over a second timescale different from the first timescale. The second timescale may correspond to a sampling interval at which one or several measurements included in the signal that is input to the autoencoder are samples. The first timescale may correspond to a regular or irregular sub-sampling of the second timescale. I.e., the first timescale may be associated with slower variations than the second timescale.

In some implementations, the ML model training is performed in such a manner that latent features included in the code output by the encoder of the autoencoder include one or several first latent features that are associated with a first spatial domain and one or several second latent features that are associated with a second spatial domain different from the first spatial domain.

A specific ML model architecture may be used in the techniques disclosed herein. The ML model may comprise a first encoder that may comprise a first encoder output layer operative to output a first set of latent features that is updated at a first rate. The ML model may comprise a second encoder that may comprise a second encoder output layer that may be operative to output a second set of latent features that is updated at a second rate different from the first rate. The second rate may be less than the first rate such that latent features included in the second set are updated less frequently than latent features included in the first set.

During autoencoder training, information may be "forced" into latent features included in the second set. This may be implemented in various ways, as disclosed herein.

Ensuring a desired separation of latent features according to timescales, spatial domains, and/or logical groupings may be enforced in various ways. In some implementations, an adversarial decoder training may be performed. An adversarial decoder and the decoder of the ML model may be trained in an iterative procedure, with only a sub-set of (e.g., slower varying) latent features in the code of the encoder being provided to the adversarial decoder. Alternatively or additionally, additional signals that are known to vary more slowly than a characteristic operational timescale of the physical asset may be provided to the decoder of the ML model during ML model training.

Historical data obtained by measurements on the physical asset for which the signal processing logic is generated may be used as part of the training data when generating the signal processing logic. Alternatively or additionally, historical data obtained by measurements on similar assets (e.g., assets of the same or similar specifications and the same or similar deployment scenario) as the physical asset for which the signal processing logic is generated may be used as part of the training data when generating the signal processing logic.

The signal processing logic may be used to perform control, monitoring, and/or analysis functions during field use of the physical asset. Asset health monitoring and outputting a result of the asset health monitoring is one example for such operations that may be performed by the signal processing logic. Executing the signal processing logic to perform preventive or corrective control operations is another example. The preventive or corrective control operations may comprise operating at least one circuit breaker, disconnector, converter, etc.

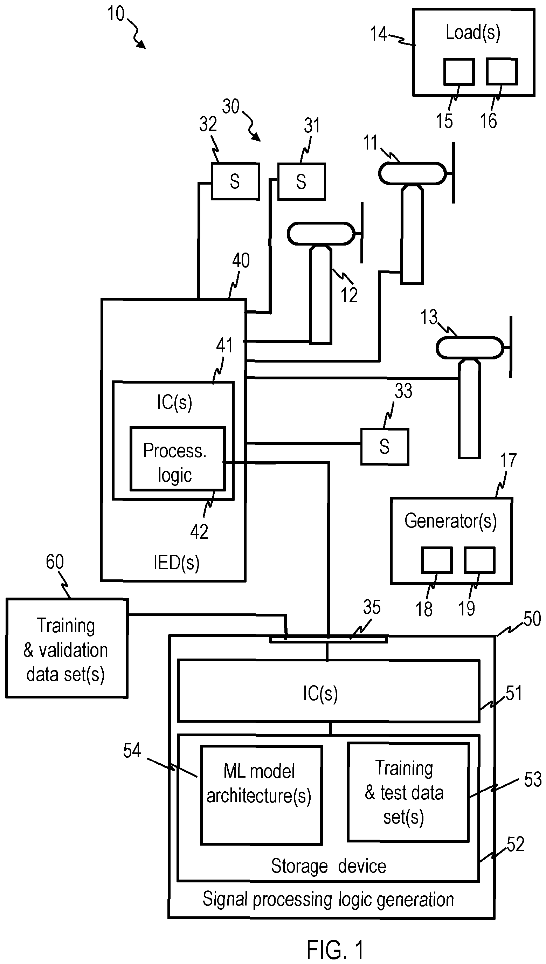

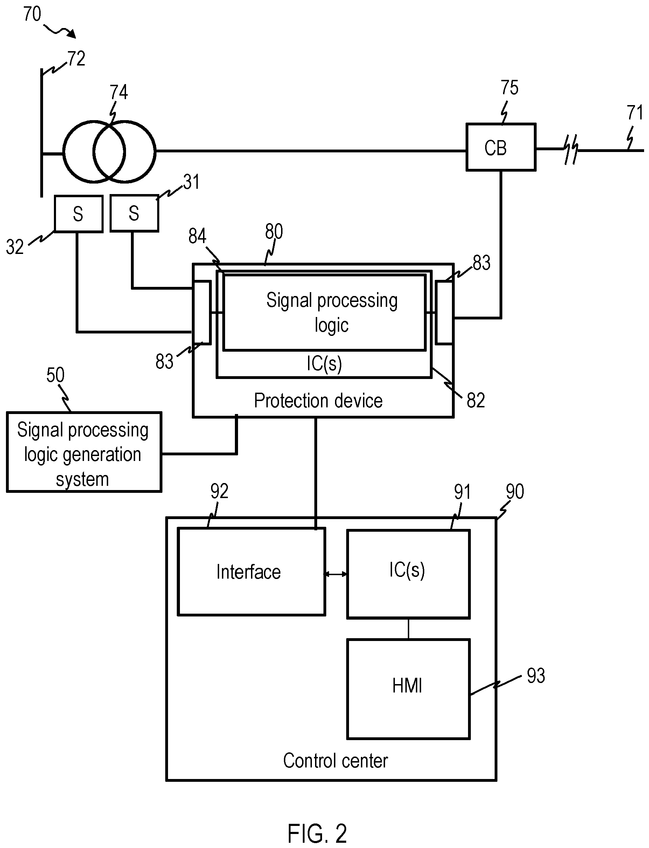

Figures 1 and 2 shows electric power systems 10 comprising a device 40, 80 having one or several integrated circuits (IC(s)) 41, 81 operative to execute a signal processing logic 42, 82. The signal processing logic 42, 82 receives signals as inputs and processes the signals into one or several features. The signal processing logic 42, 82 performs a control, monitoring, and/or analysis operation responsive to the signals, which include signals from one or several measurement devices 31, 32, 33, collectively referred to as measurement system 30. The signal processing logic 42, 82 may perform control, monitoring, and/or analysis functions during field use of the physical asset. The signal processing logic 42, 82 may perform asset health monitoring and output a result of the asset health monitoring. Alternatively or additionally, the signal processing logic 42, 82 may perform preventive or corrective control operations. The preventive or corrective control operations may comprise operating at least one circuit breaker, disconnector, converter, etc.

The IC(s) 41, 81 may be or may comprise any one or any combination of a processor, a microprocessor, a controller, a microcontroller, an application specific integrated circuit (ASIC), a field-programmable gate array (FPGA), or other integrated circuit(s).

The measurement system 30 may comprise current and/or voltage transformers, temperature sensors, circuit breaker position sensors, other sensors installed on or associated with a circuit breaker, sensors installed on or associated with an electric power transformer (such as insulation fluid temperature sensors, dissolved gas analysis (DGA) sensors, etc.), sensors installed on or associated with a load tap changer, and/or sensors installed on or associated with converters (such as AC/DC converters).

The system 10 comprises one or several physical assets. The physical assets may be or may comprise electric power system assets. The electric power system may comprise a microgrid, a distributed energy resource (DER), renewable energy resources, or other assets, without being limited thereto. For illustration, the system 10 may comprise power generating assets 11-13, which may be or comprise renewable energy power generating assets. The system 10 may comprise controllable loads 14, which may include one or several controllable loads 15, 16. The system 10 may comprise one or several controllable generators 18,19 which consume fossil fuel to generate electric power. The signal processing logic 42 may be operative to execute a signal processing logic, which may include at least an encoder of a trained ML model as described more fully herein, to perform one or several of asset monitoring, asset control, and/or asset analysis for one or several of the energy generating systems 11-13, the generators 18, 19, the loads 15, 16, and/or other devices deployed in the system 10.

The techniques disclosed herein are not limited to microgrids or DERs, but may be used for a wide variety of different electric power systems or other systems that involve system automation. For illustration, and as shown in Figure 2, system 70 may comprise an electric power system having a line 71 connected to a bus 72 via a power transformer 74. A circuit breaker (CB) 75 may be provided. A protection device 80 (which may be an intelligent electronic device (IED)) may process measurements sensed during field operation by one or several sensing devices 31, 32, using a signal processing logic 84 that may include at least an encoder of a trained ML model, which has been trained as more fully described herein. The signal processing logic 82 may generate an output that may be used to control a controllable device of the electric power system 70 (such as CB 75) to perform preventive and/or corrective control actions. A control command output via an interface 83 may be triggered based on an output of the signal processing logic 82. Alternatively or additionally, the signal processing logic 82 may generate an output that may be used for displaying an alarm, warning, asset health information or other information related to the electric power system determined by the signal processing logic 82 via a human machine interface (HMI) 93. The HMI 93 may be provided in a control center 90 operative to receive an output of the signal processing logic 82. The control center 90 may be a national or regional control center, or a control center dedicated to a microgrid. The control center 90 may include one or several IC(s) 91 operative to process an output of the signal processing logic 82 and to control the HMI based thereon.

The system 10, 70 includes a signal processing logic generation computing system 50. The computing system 50 is generally operative to perform ML model training to generate the signal processing logic 42, 82. The computing system 50 may perform the ML model training in such a manner that latent features included in a code output by the encoder of the trained ML model include different sets that are associated with different temporal, spatial, spatio-temporal, and/or logical domains. An architecture of the ML model may be used in which some latent features are updated less frequently than others (e.g., by virtue of the architecture used in the ML model).

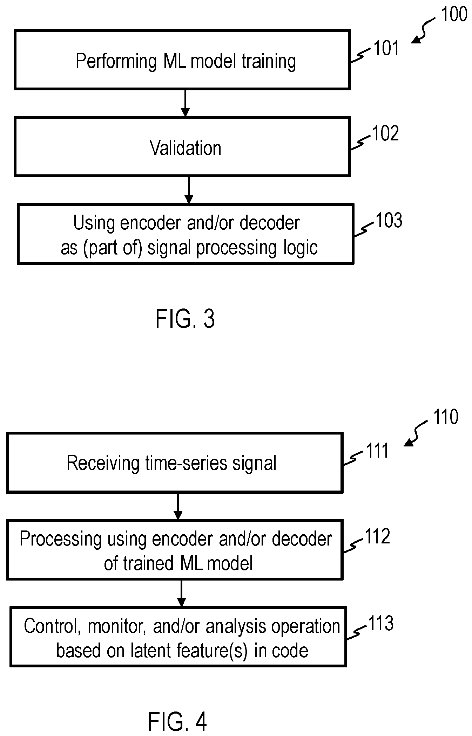

The computing system 50 may perform the ML model (e.g., autoencoder) training in a manner which enforces the latent features to include one or several first latent features associated with a first timescale and one or several latent features associated with a second timescale different from the first timescale. Alternatively or additionally, the computing system 50 may perform the ML model training in a manner which enforces the latent features to include one or several first latent features associated with a first spatial domain size and one or several latent features associated with a second spatial domain size different from the first spatial domain size. Alternatively or additionally, the computing system 50 may perform the ML model training in a manner which enforces the latent features to include one or several first latent features associated with a first spatiotemporal domain and one or several latent features associated with a second spatiotemporal domain different from the first spatiotemporal domain. Alternatively or additionally, the computing system 50 may perform the ML model training in a manner which enforces the latent features to include one or several first latent features associated with a first logical domain and one or several latent features associated with a second logical domain different from the first logical domain. Different techniques that may be employed by the computing system 50 are described in more detail with reference to Figures 3 to 29 below.

The computing system 50 is operative to perform a signal processing logic generation, to generate and/or update a signal processing logic 42, 82. The signal processing logic generation comprises performing an ML model training. The signal processing logic that is deployed to an IED 40, 80 for execution may be or may be based, at least in part, on at least an encoder and/or a decoder of the trained ML model, optionally based on both an encoder and a decoder of the trained ML model.

The computing system 50 comprises one or several IC(s) 51 to perform the ML model training and optional further post-conditioning steps that may be used to generate the signal processing logic from the trained ML model. The IC(s) 51 may be or may comprise any one or any combination of a processor, a microprocessor, a controller, a microcontroller, an application specific integrated circuit (ASIC), a field-programmable gate array (FPGA), or other integrated circuit(s).

The computing system 50 may comprise a storage device 52 that may comprise volatile and/or non-volatile storage components. The storage device 52 may have stored therein data 54 defining possible ML model architectures. The data 54 may define different candidate neural networks or other ML architectures, one or several of which may be trained in the ML model training.

The computing system 50 may use training and validation data sets 53, 60 that are used for training the ML model and for performing validation. Some or all of the training and validation data sets 53, 60 may be stored locally in the storage device 52. Alternatively or additionally, some or all of the training and validation data sets may be retrieved from an external data repository. The training and/or validation data may comprise measurements performed on the specific system for which the signal processing logic is to be generated (which may be particularly suitable for improving the signal processing logic during field use) and/or on physical assets of a similar or same construction and/or function as used in the systems 10, 70.

The computing system 50 may be or may comprise one or several computers, one or several servers, or other computing devices.

The computing system 50 is operative to generate or update a signal processing logic 42, 82 for processing signals. The signals may be time-series signals. The signals comprise measurements associated with a physical asset of the system 10, 70.

The computing system 50 is operative to train a ML model. The ML model comprises an encoder having an input layer to receive input signals, in particular time-series input signals, the encoder being operative to generate a code comprising latent features.

The ML model comprises a decoder having an output layer, the decoder being operative to process decoder inputs comprising the code to generate an autoencoder output that comprises a reconstruction of at least some of the input signals.

The computing system 50 is operative such that training the ML model comprises providing training signals as the input signals to the input layer.

The computing system 50 may be operative such that, during training, the decoder inputs are generated from the code and from additional signals different from the code.

The computing system 50 may be operative to provide at least the encoder and/or decoder of the trained ML model as at least part of a signal processing logic to a device 40, 80 that executes the signal processing logic to control, monitor, and/or analyze the physical asset. The computing system 50 may have an interface 55 to output at least the encoder of the trained ML model to the device 40, 80 for execution.

Figure 3 is a flow chart of a method 100. The method 100 may be performed automatically by the computing system 50 to generate a signal processing logic.

At step 101, ML model training is performed. The ML model training may be performed by the computing system 50. The ML model training may be performed using measurement data that includes measurements obtained from a system that includes the physical asset for which the signal processing logic is determined. The ML model training may be performed in a manner which enforces a code generated by an encoder of the autoencoder to include one or several first latent features associated with a first temporal, spatial, logical, or spatio-temporal scale and one or several second latent features associated with a second temporal, spatial, logical, or spatio-temporal scale that is different from the first temporal, spatial, logical, or spatio-temporal scale.

The ML model may comprise an encoder having an output layer that outputs or updates first latent features at a first rate and second latent features at a second rate different from the first rate.

Step 101 may comprise enforcing the separation of latent features into at least two groups (e.g., by ensuring that relevant information is forced into the latent features that are updated less frequently) using adversarial decoder training. In the adversarial decoder training, only part of the code may be provided to an adversarial decoder input layer of an adversarial decoder.

Alternatively or additionally, step 101 may comprise enforcing the separation of latent features into at least two groups (e.g., by ensuring that relevant information is forced into the latent features that are updated less frequently) by treating signals differently depending on whether they vary more rapidly or more slowly.

Alternatively or additionally, step 101 may comprise enforcing the separation of latent features into at least two groups (e.g., by ensuring that relevant information is forced into the latent features that are updated less frequently), by supplying signals that are sampled at a lower rate than other signals (such as weather data) to both the input layer of the encoder and a decoder input layer of the decoder during ML model training.

At step 102, validation is performed. Validation may comprise verifying that a distance between encoder inputs (e.g., an input time series) and an output of the decoder (e.g., a reconstruction of the input generated by the decoder from the code provided by the encoder) fulfills a quality criterion. The quality criterion may be a threshold criterion. The validation may be performed using part of the training and validation data that was not used for training.

At step 103, at least part of the trained ML model (e.g., the encoder and/or decoder) may be stored in a device (e.g., an IED). The device may execute the encoder to identify characteristics of the asset associated with a first temporal, spatial, logical, or spatio-temporal scale different from a second temporal, spatial, logical, or spatio-temporal scale. The features that are grouped, by virtue of the ML model training, to correspond to different temporal scales, for example, may be used to perform at least one control, monitoring, and/or analysis function during field use of the physical asset.

The device may execute the decoder for anomaly detection and/or further analytics. For illustration, the decoder may operate on signals captured during field use of an asset (such as an asset health indicator), to estimate a loss function (such as a reconstruction loss or prediction loss). This information may be used, optionally in combination with loss function values (e.g., reconstruction losses) determined during ML model training, for asset analytics.

Thus, the ML model training may be used for feature engineering, with at least some of the features being used during field use to perform at least one control, monitoring, and/or analysis function during field use of the physical asset.

Figure 4 is a flow chart of a method 110. The method 110 may be performed automatically by a device 40, 80 by executing a signal processing logic that is based on a trained ML model. The signal processing logic may be or may include at least the encoder of the trained ML model.

At step 111, a time-series signal is received. The time-series signal may be received from a field device (such as an IED, a gateway, and/or a merging unit). The time-series signal may be retrieved from a storage system.

The time-series signal may include or may otherwise depend on measurements obtained from a physical asset for which a control, monitoring, and/or analysis operation is to be performed, or from a component coupled (e.g., electrically coupled) thereto.

The time-series signal may comprise voltage and/or current measurements. The voltage and/or current measurements may be sampled at a sampling interval.

At step 112, the time-series signal may be processed using a signal processing logic. The time-series signal may be input to an input layer of an encoder of a ML model that has been trained as described in association with step 101. An output layer of the encoder may provide one or several first latent features associated with a first temporal, spatial, logical, or spatio-temporal scale and one or several second latent features associated with a second temporal, spatial, logical, or spatio-temporal scale that is different from the first temporal, spatial, logical, or spatio-temporal scale, as determined from the input signal.

At step 113, a control, monitor, and/or analysis operation is performed. The control, monitor, and/or analysis operation may be based on at least one of the latent features in the code. Alternatively or additionally, the operation may be determined by executing the decoder of a trained ML model. An analysis operation may be performed based on one or several first latent features associated with a first timescale which is longer than the sampling interval and/or that is longer than a second timescale with which at least a different one of the latent features is associated. The at least one control operation may comprise one or several of: triggering a protection function, controlling an interface to perform an output operation, controlling at least one operation parameter of the physical asset, controlling at least one operation parameter of a power system asset different from the physical asset.

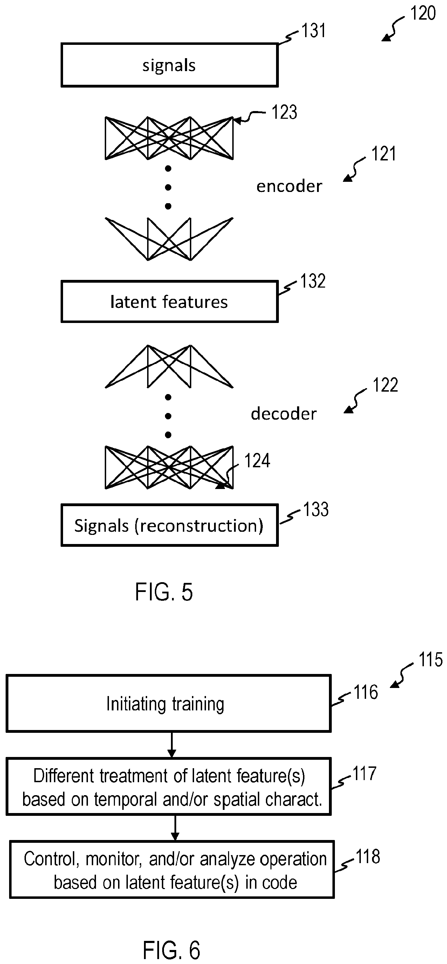

Figure 5 is a schematic representation of a ML model 120 that may be used in methods, devices, and systems as disclosed herein. The ML model 120 comprises an encoder 121 and a decoder 122. The encoder 121 may comprise one or several machine learning (ML) models, such as artificial neural networks (ANNs), in particular recurrent neural networks (RNNs), without being limited thereto. The decoder 122 may comprise one or several other machine learning (ML) models, such as artificial neural networks (ANNs), in particular recurrent neural networks (RNNs), without being limited thereto. The ANN(s) of the decoder 122 may be distinguished from the ANN(s) of the encoder 121 in a number of input nodes. The ANN(s) of the decoder 122 may be distinguished from the ANN(s) of the encoder 121 in a number of output nodes. The ANN(s) of the decoder 122 may be distinguished from the ANN(s) of the encoder 121 in a number of hidden layers. The ANN(s) of the decoder 122 may be distinguished from the ANN(s) of the encoder 121 in activation functions used in the ANN(s). When RNNs that include gated recurrent unit(s) (GRUs) and/or long-short term memory (LSTM) cells are used, weights and/or activation functions and/or biases may be different in the decoder 122 and the encoder 121.

The encoder 121 may be operative to process the input signal(s) 131 into a code that comprises plural latent features 132. A number of latent features is less than a number of input nodes of the encoder 121. I.e., the encoder 121 may "condense" the information included in the input signal (which may be a N-dimensional vector) into a number K of latent features, with K < N.

The decoder 122 may be operative to process a decoder input into a decoder output. The decoder output may be a reconstruction 133 of the input signal(s). The decoder input may include some or all of the latent features 132 included in the code generated by the encoder 121.

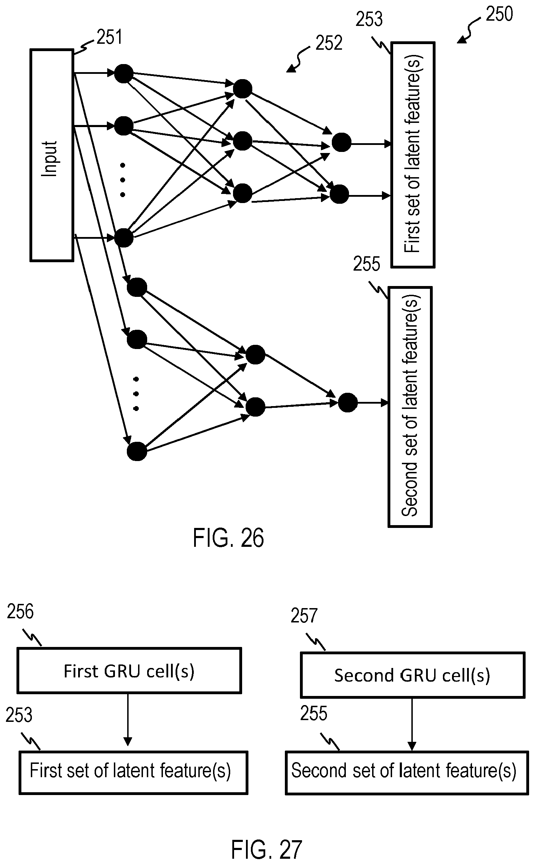

An architecture (e.g., topology) of the ML model may be such that several encoders are operative output different sets of latent features, each including one or several latent features. Figure 26 shows an example of a ML model 250 comprising a first encoder (which may be trained using the methods disclosed herein to generate a signal processing logic and/or that may be run as a signal processing logic after training) and a second encoder (which may be trained concurrently with the first encoder). The ML model 250 has an architecture 252 comprising a first encoder that causes inputs 251 to be processed into a first set of one or several first latent features 253 and comprising a second encoder that causes inputs 251 to be processed into a second set of one or several second latent features 255. The first and second encoders are set up such that the first set 253 is output or updated more frequently than the second set 255.

By virtue of the training, and the techniques described herein, it is ensured that the latent features included in the second set 255 depend on the input 251 so as to provide relevant information on features, e.g., features that vary slowly on a temporal scale (as may be relevant for asset health assessment).

Figure 27 shows an example of GRU cells 256, 257 included in an encoder (which may be trained using the methods disclosed herein to generate a signal processing logic and/or that may be run as a signal processing logic after training). The GRU cells 256, 257 are set up in a manner that causes inputs 251 to be processed into a first set of one or several latent features 253 and a second set of one or several latent features 255. The ML model 250 is set up such that the first set 253 is output or updated more frequently than the second set 255. By virtue of the training, and the techniques described herein, it is ensured that the latent features included in the second set 255 depend on the input 251 so as to provide relevant information on features, e.g., features that vary slowly on a temporal scale (as may be relevant for asset health assessment).

It will be appreciated that all parameters of the encoders (i.e., both those related to the part of the architecture that provides the first set 253 of latent features and those related to another part of the architecture that provides the second set 255 of latent features) are updated in one training procedure, which may be an iterative training procedure.

During ML model training, latent features included in the second set (i.e., latent features that are updated less frequently) may be replicated along the time axis and combined (e.g., concatenated) with latent features included in the first set (i.e., latent features that are updated more frequently).

In ML model training, the ML model 120 is trained with an objective of minimizing a loss function. The loss function may quantify a difference between the signals 131 received at an input layer of the encoder 121 and the output 133 provided by an output layer of the decoder 122.

As will be explained in more detail below, a number of input nodes of the decoder 122 may be different from a number of output nodes of the encoder 121 when the autoencoder 122 is trained. Additional signals may be fed into the decoder 122 during training. The additional signals may be selected, e.g., so to enforce that one or several of the latent features 132 are associated with different temporal, spatial, spatio-temporal, and/or logical scales than at least another one or several other of the latent features 132, as described more fully herein. The additional signals may be provided by a second encoder of the ML model.

The autoencoder 120 may be operative to receive and process recordings of operational data from one or more assets. The operational data constitute time series data $(x_t)_{t=1}^{T}$ where $x_t$ is a N-dimensional vector, which may have real- or complex-valued vector elements. T denotes a number of points in time. t is an index designating a point in time. The T points in time may be regularly or irregularly spaced. $x_t$ may include $N$ real-valued or complex-valued signals. The input signals can also be of different type, e.g. categorical. It will be appreciated that, for use with ANN, it is such data can be converted to real-valued data before further processing (e.g. categorical data may be represented through the well-known one-hot-encoding). Thus, the discussion can be restricted to real-valued signals (it being understood that a N-dimensional complex-valued vector can be mapped into a 2N-dimensional real-valued vector).

The operational data may contain missing values, which may be treated by known techniques. In some cases, any vector $x_t$ that contains missing values may be removed. Other techniques such as interpolation between adjacent vectors, hard value imputation, etc. may be used to substitute missing values, if any. Missing data replacement may be performed using a machine learning (ML) model trained to replace missing data, as disclosed, e.g., in WO 2019/141856 A1.

Operational data is typically recorded at a timescale that is referred to as second timescale herein. This timescale may also be referred to as operational timescale. The second timescale may be associated with a sampling interval that may be small (in the sense that it is smaller than a first timescale discussed below, over which slower trends occur). E.g. the operational data may be recorded at a timescale (defined by, e.g., an average sampling interval) of 1 hour or less, 2 hours or less, 3 hours or less, 5 hours or less, 10 hours or less; 1 minute or less, 2 minutes or less, 3 minutes or less, 5 minutes or less, 10 minutes or less; 1 second or less, 2 seconds or less, 3 seconds or less, 5 seconds or less, 10 seconds or less; or sub-seconds, e.g., 1 second or less, 800 msec or less, 500 msec or less, 300 msec or less, 200 msec or less, 100 msec or less.

The methods, devices and systems disclosed herein are useful to determine an evolution of the asset (e.g. its state of health) over a timescale (referred to as first timescale) which is larger relative to the operational timescale, such as on a timescale of 1 day or more, 2 days or more, 3 days or more, 5 days or more, 10 days or more; 1 week or more, 2 weeks or more, 3 weeks or more, 5 weeks or more, 10 weeks or more; 1 month or more, 2 months or more, 3 months or more, 5 months or more, 10 months or more; 1 year or more, 2 years or more, 3 years or more, 5 years or more, 10 years or more. Slow evolution, e.g., ageing, gradual degradation, wear, leakage, etc. can be observed on the slow first timescale. However, considering the raw data only, this is a hard problem, because the effects at the operational timescale are superimposed on the slow timescale, and their variations are typically much larger than the variations on the slow timescale.

To facilitate the analysis of the evolution of the operational characteristics of the asset(s) on the slow timescale, the methods, devices, and systems afford automatic feature engineering that is designed to extract features on the slow first timescale. This is done in a manner which enhances (e.g., maximizes) the significance of the engineered features. Referring to, e.g., Figures 26 and 27, while the architecture of the encoder and the number of latent features included in the first and second sets 253, 255 may be fixed, the techniques disclosed herein specify the manner in which the latent features included in the second set 255 (which may be particularly useful for identifying slowly varying trends) depend on the input 251.

The method methods, devices, and systems are based on ML models, which may be or may comprise ANN-implemented autoencoders.

Alternatively or additionally to feature engineering for timescale separation, the methods, devices, and systems may also be operative to perform automatic engineering of multiple sets of features corresponding to different logical parts of the system, thus e.g. achieving a spatial separation or a separation by different subsystem, and/or to use such features in field use of an electric power system asset or other physical asset.

Figure 6 is a flow chart of a method 115 that may be performed by the system 10, 70. The method may be performed automatically by a computing system 50 that performs ML model training and at least one device 40, 80 that executes a signal processing logic that is based on the trained ML model.

At step 116 is initiated. Initiating training may comprise selecting a type of physical asset, retrieval of information on the system in which the physical asset is included, selection of training and/or validation cases based on the asset type and the system topology, etc. The information on the system may comprise information on system topology that may be obtained from a substation configuration description (SCD) of an electric power system. For illustration, a process section of a substation configuration language (SCL) file may be analyzed to identify suitable test cases and/or validation cases for ML model training.

At step 117, ML model training is performed. Latent features may be treated differently depending on whether they are associated with a first temporal, spatial, or spatio-temporal scale or a different second temporal, spatial, or spatio-temporal scale. This may be done in various ways. For illustration, and as explained more fully herein,

- parameters that are exogenous to the physical asset and/or electric power system while affecting its operation may be fed into the decoder 122 during ML model training, in addition to the latent features 132 in the code generated by the encoder 121; weather conditions or varying loads are examples for such conditions; and/or
- adversarial machine learning (ML), in particular adversarial decoder training may be performed in which features generated by an encoder of an adversarial system are fed into the decoder 122 during ML model training, in addition to the latent features 132 in the code generated by the encoder 121.

Other techniques, such as regularization techniques, may be used in addition or alternatively to enforce a separation of latent features in the code generated by the encoder 131, in accordance with the temporal, spatial, or spatio-temporal scale with which the features are associated.

Techniques that enforce the encoder 121 to generate one or several first latent features associated with a first timescale or a first spatial scale and one or several second latent features associated with a different second timescale or different second spatial scale may be employed only during generation of the signal processing logic and, more specifically, during ML model training but not during the subsequent execution of the signal processing logic by a field device.

At step 118, the signal processing logic is executed to control, monitor, and/or analyze operation of the physical asset based on one or several latent feature(s) in the code. In field use, the device 40, 80 may take control actions based at least on feature(s) associated with the faster first timescale; the control actions may be dependent on or independent of latent feature(s) associated with the second slower timescale. In field use, the device 40, 80 may perform analysis actions based at least on feature(s) associated with the second slower timescale; the analysis actions may be dependent on or independent of latent feature(s) associated with the first faster timescale.

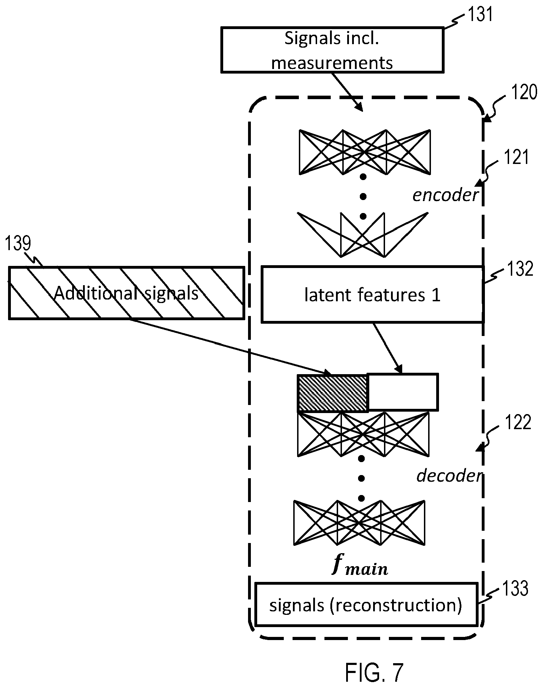

Figure 7 is a schematic view illustrating ML model training implemented in such a manner that a desired grouping of latent features in accordance with timescales and/or spatial scales. The ML model 120 that is being trained for deployment in a signal processing logic generates a code including latent features 132.

The decoder 122 is designed such that a number $I_D$ of decoder input nodes is greater than a number $O_E$ of output nodes of the encoder 121. For illustration, the number $I_D$ of decoder input nodes of the decoder 122 may be at least 10%, at least 20%, at least 30%, at least 50% greater than the number $O_E$ of output nodes of the encoder 121. The number $I_D$ of decoder input nodes of the decoder 122 may be equal to or greater than twice the number $O_E$ of output nodes of the encoder 121. The number $O_D$ of output nodes of the decoder 122 may be equal to a number $I_E$ of input nodes of the encoder 121.

The input of the decoder 122 is coupled, during ML model training, to a source of additional signals 139. The additional signals 139 may include code generated by another encoder. The additional signals 139 may include measurements sampled at a second sampling interval or second average sampling interval that is greater than a first sampling interval or first average sampling interval at which at least one, several, most, or all of the encoder inputs is sampled.

ML model training may be performed with an objective of minimizing or maximizing an objective function. The objective function may comprise a loss function, such as a reconstruction loss or a prediction loss. The objective function may comprise one reconstruction or prediction loss (of the "main" encoder 121 and decoder 122) that is minimized and another reconstruction or prediction loss (of the "auxiliary" signal processing path through a second, adversarial decoder) that is being maximized. The loss functions (or reconstruction or prediction losses) may but do not need to be the same.

The objective function may be dependent on a distance between the encoder input 131 and the decoder output 133, determined in accordance with a metric. For illustration, the objective function that may be optimized (e.g., minimized) may be or may comprise a reconstruction loss.

The objective function may be equal to or may include

$$\sum_{i=1}^{I_E} \|r_i(t) - s_i(t)\| \qquad (1)$$

where i is a label for the encoder input signals, $s_i$ designates encoder input signals, $r_i$ designates decoder output signals, and $\|\cdot\|$ designates a norm, such as a metric. Other distance measures may be used, such as entropy or entropy-based measures. t is one of the sampling times.

The objective function may be equal to or may include

$$\sum_{j=1}^{J} \sum_{i=1}^{I_E} \|r_i(t_j) - s_i(t_j)\| \qquad (2)$$

where $t_j$ is a sampling time and J is a number of sampling times. Autoencoder inputs may be available at times spaced in the time domain by a constant or varying sampling interval.

ML model training may comprise adjusting parameter values of a first ANN comprised by the encoder 121 and parameter values of a second ANN comprised by the decoder 122. The parameter values that are adjusted during training may comprise weights between nodes of the first and second ANNs. The parameter values that are adjusted during ML model training may comprise parameters of recurrent neural networks, such as parameters of GRU or LSTM cells. The parameter values that are adjusted during ML model training may comprise biases and/or weights of GRU or LSTM cells or other parameter values that define an ANN.

ML model training may be performed using techniques that are known, such as gradient descent or other known techniques. In contrast to conventional ML model training techniques, the ML model training may be implemented so as to enforce latent features in the code to be separated into two or more groups. The separation represents different timescales, spatial scales, spatio-temporal scales, or logical domains.

The additional signals 139 may include measurements that are different from, optionally disjoint from, the signals 131 provided to the encoder 121 as encoder inputs during ML model training. The additional signals 139 may comprise additional measurements that are different from, optionally disjoint from, the signals 131 provided to the encoder 121 as encoder inputs during ML model training. The additional signals 139 may comprise additional measurements that vary over a slower timescale than one, several, or all of the measurements included in the signals 131 provided to the encoder 121 as encoder inputs during ML model training. Alternatively or additionally, the additional signals 139 may comprise additional measurements that vary over a greater spatial scale than one, several, or all of the measurements included in the signals 131 provided to the encoder 121 as encoder inputs during ML model training. Alternatively or additionally, the additional signals 139 may comprise additional measurements associated with a different hierarchy level of a logical hierarchy than one, several, or all of the measurements included in the signals 131 provided to the encoder 121 as encoder inputs during ML model training.

One, several, or all of the additional signals 139 may optionally also be included in the signals 131 that are 131 provided to the encoder 121 as encoder inputs during ML model training.

In field use of the signal processing logic generated from the trained ML model, it is possible that a signal processing logic is deployed that is or includes only the encoder 121 of the trained ML model. I.e., the issue of which additional signals 139 are to be fed to the decoder 122 of the trained ML model during field use may not arise. Optionally, the additional signals 139 may also be used during field use for operating the decoder 122.

As will be described in more detail below, the additional signals 139 may also be obtained in other ways. For illustration, the additional signals 139 may include at least some signals that are obtained from an adversarial decoder or encoder.

By feeding the additional signals 139 to the decoder stage 122 that vary on a different temporal, spatial, spatiotemporal, or logical scale than the signals 131 during ML model training, a desired separation of the latent features 132 into two or more groups associated with different temporal, spatial, spatiotemporal, or logical scales is attainable.

The techniques of the invention afford automatic feature engineering with separation of timescales, but different forms of separation (spatial, spatio-temporal, logical) can also be attained.

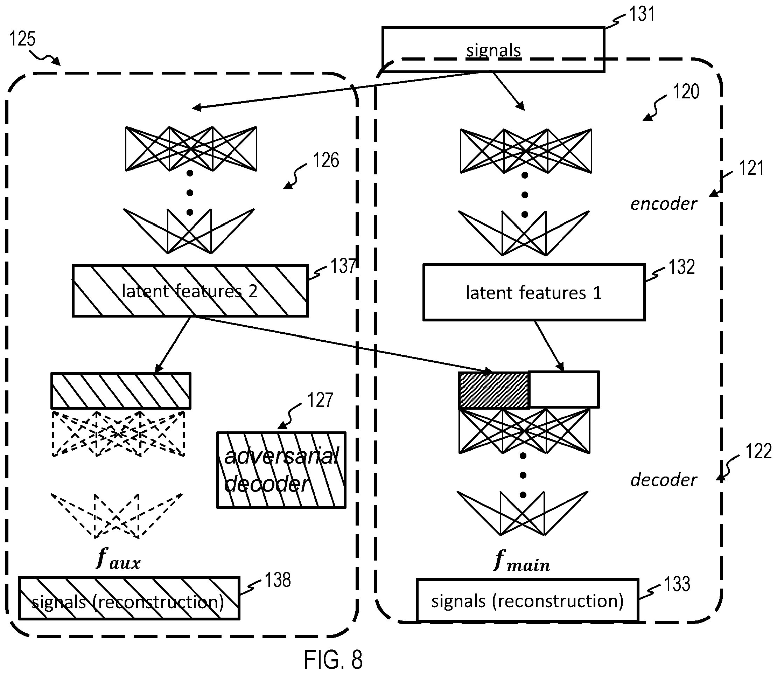

Figure 8 illustrates a method and operation of a system in which the additional signals supplied to the decoder 122 of the autoencoder 120 during training are based on latent features in a code 137 of a second ML model part 125. The autoencoder 121 and the second ML model part 125 may be trained in parallel. While adversarial training of autoencoders (or decoder stages of autoencoders) will be described below, a different ML model may be used as adversary of the autoencoder 120 during ML model training.

By implementing adversarial training, a desired separation of features according to their timescales, spatial scales, etc. in the code generated by the encoder 121 may be enhanced. The adversarial technique takes advantage of the fact that much of the relevant information from the signals 131 tends to be represented in features that vary on a faster timescale (also referred to as dynamic features for brevity in the following) only, while the features that vary on a slower timescale (referred to as static features for brevity) may contain little meaningful information. The adversarial techniques enable successful construction of meaningful, static features. Automatic feature engineering that provides slowly varying features indicative of slowly varying asset characteristics is thus achieved.

The technique of Figure 8 is based on adversarial training. The overall ANN / computational graph is extended with a second parallel decoder stage 127 (the "adversary"). The decoder 127 may have access to the dynamic latent features (i.e., the latent features that vary more rapidly than others). Then, the training alternates between two steps:

(i) Training of the adversary, i.e., the decoder 127. Only the weights corresponding to the dashed connections in Figure 8 may be trained, to minimize the loss function (e.g., reconstruction loss or prediction loss) between the data 131 to be reconstructed and the adversary's output 138.

(ii) Training of the encoder 121 and decoder 122. Only the weights corresponding to the solid black lines in autoencoder 120 (illustrated on the right-hand side of Figure 8) are trained, to minimize a total objective function.

During the training, one, several, or all of the latent features 137 generated by the encoder 126 may be provided to the decoder 122 during training of the autoencoder 120.

The objective function may comprise a term associated with a loss function (e.g., reconstruction loss or prediction loss) of the decoder 122. The objective function may comprise a second term, the adversarial loss. The objective function may be a sum of reconstruction loss and adversarial loss.

$$l_{tot} = l_{rec}(f_{main}) - \alpha \cdot l_{adv}(f_{aux}) \qquad (3)$$

In Equation (3), $f_{main}$ designates the output of the decoder 122 (i.e., the output of the autoencoder 120). The output of the decoder 122 may comprise or consist of the reconstructions $r_i(t_j)$ for each of the input signals (as a function of time, where applicable). The reconstruction loss $l_{rec}$ may have any one of the forms described in association with Equations (1) and (2), without being limited thereto. Any metric that quantifies how closely the autoencoder output 133 represents the encoder inputs 131 may be used to define the reconstruction loss.

In Equation (3), $f_{aux}$ designates the output of the adversarial decoder 127. The output of the autoencoder 120 may comprise or consist of the reconstructions $r_{aux,i}(t_j)$ for at least some of the input signals 131 (as a function of time, where applicable). As noted above, only part of the signals 131 may be supplied to the second part 125 during adversarial training.

The adversarial loss may be a reconstruction loss, which may be equal to or may include

$$\sum_{i=1}^{I_{E,aux}}\left\|r_{aux,i}(t) - s_i(t)\right\| \qquad (4)$$

where i is a label for the encoder input signals, $s_i$ designates encoder input signals of the second ML model part 125, $r_{aux,i}$ designates decoder output signals of the decoder 127, and $\|\cdot\|$ designates a norm, such as a metric. Other distance measures may be used, such as entropy or entropy-based measures. t is one of the sampling times. The number of signals $I_{E,aux}$ supplied to the second ML model part 125 may be different from the number of signals $I_E$ supplied to the autoencoder 120 during training. For illustration, only a sub-set of the signals 131 that is processed by the autoencoder 120 during training may be used for training the second ML model part 125.

The adversarial loss may be a reconstruction loss, which may be equal to or may include

$$\sum_{j=1}^{J}\sum_{i=1}^{I_{E,aux}}\left\|r_{aux,i}(t_j) - s_i(t_j)\right\| \qquad (5)$$

where $t_j$ is a sampling time and J is a number of sampling times. Autoencoder inputs may be available at times spaced in the time domain by a constant or varying sampling interval.

In Equation (3), $\alpha > 0$ is a constant that defines the weight of the second, adversarial training criterion. Because of the negative sign in Equation (3), increasing the adversarial loss decreases the overall objective function (which is the objective of the adversarial training). As noted above, the reconstruction loss may be used for the adversarial loss as well. In this case, the training criterion for the main autoencoder will be to simultaneously achieve a low reconstruction loss for the main decoder and a high reconstruction loss for the adversarial decoder. The adversarial loss is not limited to a reconstruction loss as indicated in association with Equations (4) and (5).

Adversarial training may therefore be an iterative process. Each of the iterations may comprise

- training the encoder 121, the decoder 122, and the second encoder 126 with objectives of minimizing the reconstruction loss of the autoencoder 120 and maximizing a reconstruction loss (the adversarial loss) of the second autoencoder 125, and
- training the second decoder 127 with an objective of minimizing a reconstruction loss of the second decoder 127.

While reference has been made to reconstruction loss above, other loss functions (such as prediction loss) or other objective functions may be used.

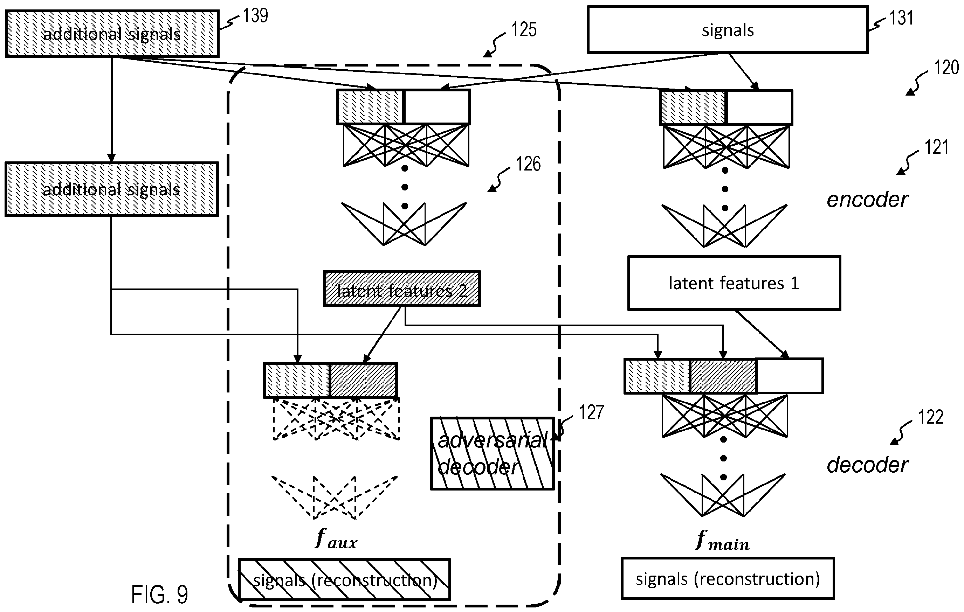

The techniques disclosed in association with Figures 7 and 8 may be combined, as illustrated in Figure 9.

Figure 9 shows operation of a method and computing system in which, during ML model training, a decoder 122 of the autoencoder 120 (at least the encoder 121 of which is used for generating the signal processing logic) receives decoder inputs that include the code generated by the encoder 121, one, several, or all latent features generated by a second machine learning model (which may be an adversary to the decoder 122 or encoder 121), and additional signals 139 that include measurements different from (and optionally disjoint from) those included in the signals 131.

The additional signals 139 may also be supplied to the second ML model part 125 during adversarial training. The additional signals 139 may include measurements sampled at a second sampling interval or second average sampling interval that is greater than a first sampling interval or first average sampling interval at which at least one, several, most, or all of the encoder inputs is sampled.

In the techniques of Figures 7 and 9, when the additional signals 139 may include measurements sampled at a second sampling interval or second average sampling interval that is greater than a first sampling interval or first average sampling interval at which at least one, several, most, or all of the encoder inputs 131 is sampled, the additional signals 139 may be replicated along the time axis for ML model training. For illustration, a plurality of different samples of a signal included in signals 131 may be input to the autoencoder architecture 120, 125, while the same sample value of a signal included in the additional signals 139 may be input to the decoder stages 122, 127, to accommodate the different sampling times.

The adversarial autoencoder techniques described in association with Figures 7-9 provide a discriminative model. This is different from adversarial autoencoder techniques for generative models.

In techniques disclosed herein, a separation of two timescales can be achieved by a corresponding autoencoder architecture and alignment of the input / output data. The two timescales are a faster timescale (e.g. the operational timescale) and a slower timescale. The faster scale typically lives on the original temporal sampling of the data (i.e. the original time points on which the data is specified). In general, it may be any timescale faster than the second timescale specified below, hence the original data may be preprocessed by any resampling, interpolation, filtering etc. method before further processing. On the other hand, the slower timescale features live on a (regular or irregular) sub-sampling of the faster timescale (which is typically the original points in time). For instance, if the original sampling rate is a regular interval of 1 minute and the slow timescale is a regular interval of 1 day, then there will be only one slow feature vector per 1 day, which is 1440 original samples.

Technically, the encoder 121 converts the data (i.e., the input signals 131) into latent features. The latent features (also referred to as code) may be a 3-dimensional tensor with the dimensions (1) slow timescale, (2) operational timescale, and (3) signals.

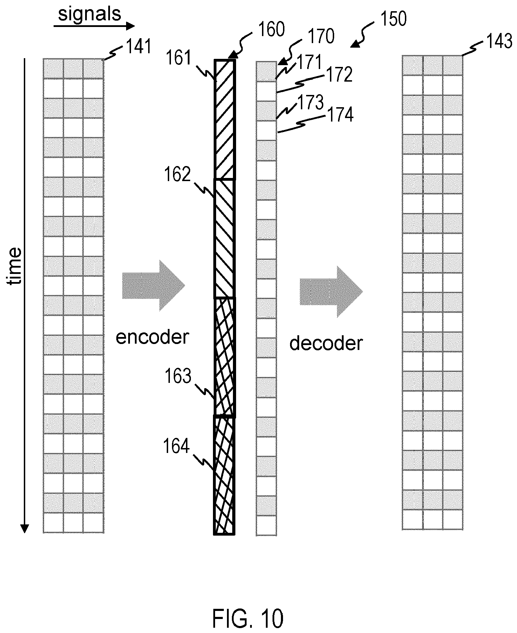

Figure 10 illustrates an encoder input 141. The encoder processes the encoder input 121 into latent features. The latent features include a group 160 of one or several first latent features associated with a first timescale. The latent features include a group 170 of one or several second latent features that vary on a different second timescale. The different points on the slow timescale are illustrated by different fill patterns 161-164 in Figure 10. The features associated with the faster second timescale are illustrated as areas 171-174. Since, for a fixed time on the slow scale, there is only a single feature vector of the slow features, these features are also referred to as static. Features that live on the operational timescale are referred to as dynamic. The latent features collectively form the code 150.

The output of the autoencoder is a reconstruction 143 of the encoder inputs 141.

During training, latent features 161-164 that are updated less frequently may be replicated along the time axis shown in Figure 10, in order to generate (part of) the decoder input.

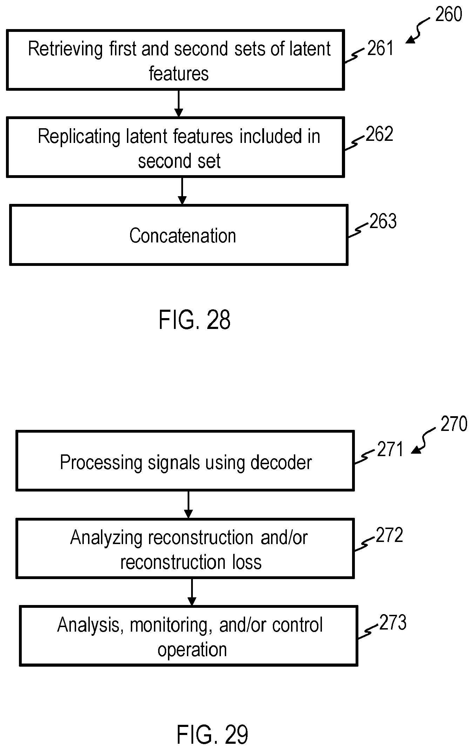

The generation of decoder input, during ML model training, may be performed using a method 260 as schematically shown in Figure 28. The method 260 may be employed to generate decoder input. At step 261, first and second sets of latent features are retrieved from an encoder output layer of first and second encoders, respectively. At step 262, latent features included in the second set are replicated along the time axis (as shown in Figure 10 by the extended areas 161-164) until a new second set of latent features becomes available. The replicas are combined with the latent features included in the first set that are updated more frequently. I.e., when K new first sets of latent features are output by the encoder while the same second set of latent features is being output, K-1 replicas of the latent features are generated and respectively combined with the first sets of latent features (e.g., by concatenation) to generate (part of) the decoder input at step 263.

In order to map the input tensor to static features, any combination of layers in the encoder can be used. The last layer of the encoder may map a sequence to a vector.

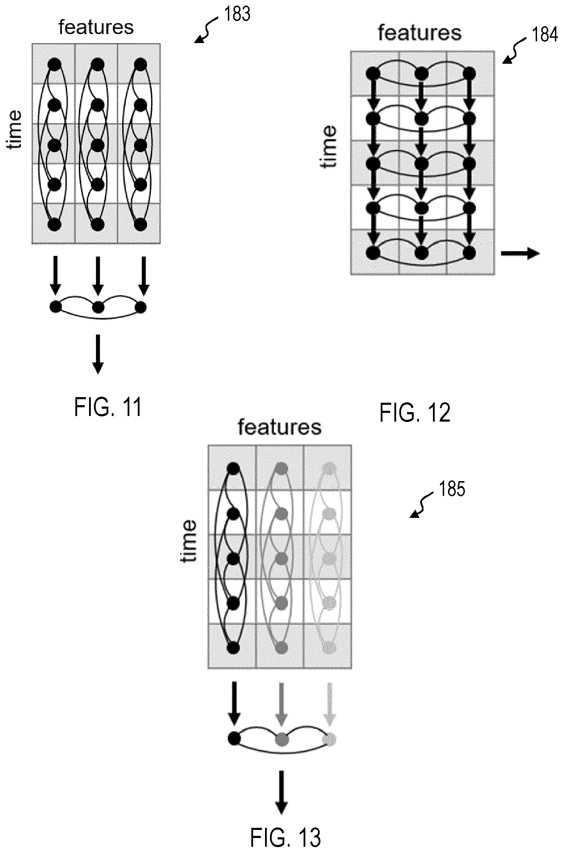

Different options for parts of encoder and decoder architectures that may be used in the autoencoder 120 and, if present, the second autoencoder 125 are illustrated in Figures 11 to 15.

Figure 11 illustrates a fully connected architecture 183 over features. This may be attained by applying an identical ANN (e.g., with identical and/or shared weights) over time.

Figure 12 illustrates an RNN architecture 184. The RNN architecture may be a LSTM or GRU with time-sequence output. In this case, a time-sequence output is provided. I.e., the architecture 185 has an output tensor that has a temporal dimension.

Figure 13 illustrates an architecture 185 that may be used as a last layer of the encoder 121 (and, optionally, of the encoder 126). First, all features are processed along the operational time dimension, where all features are treated in the same way (weight sharing). This information is then processed into a static feature vector.

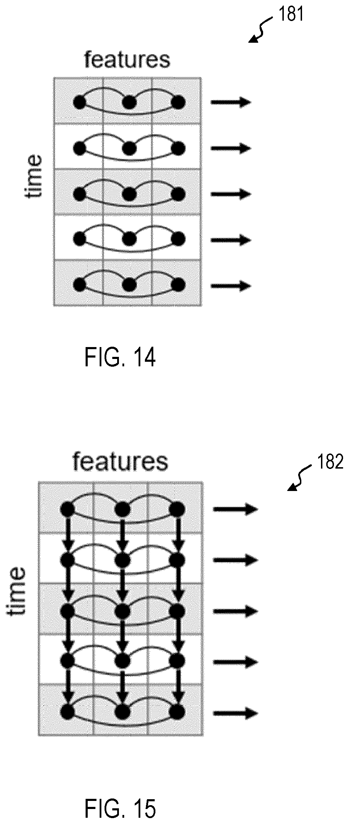

Figure 14 illustrates an architecture 186 that may be used as a last layer of the encoder 121 (and, optionally, of the encoder 126). All features are first along the operational time dimension, where all features are treated differently (no weight sharing). This information is then processed further into a static feature vector.

Figure 15 illustrates an architecture 187 in which a sequence-to-vector RNN is employed. For the input to the subsequent decoder, the static features are replicated over operational time, such that the decoder network works on the operational timescale and hence can, for instance, use elements from Figures 11 and 12.

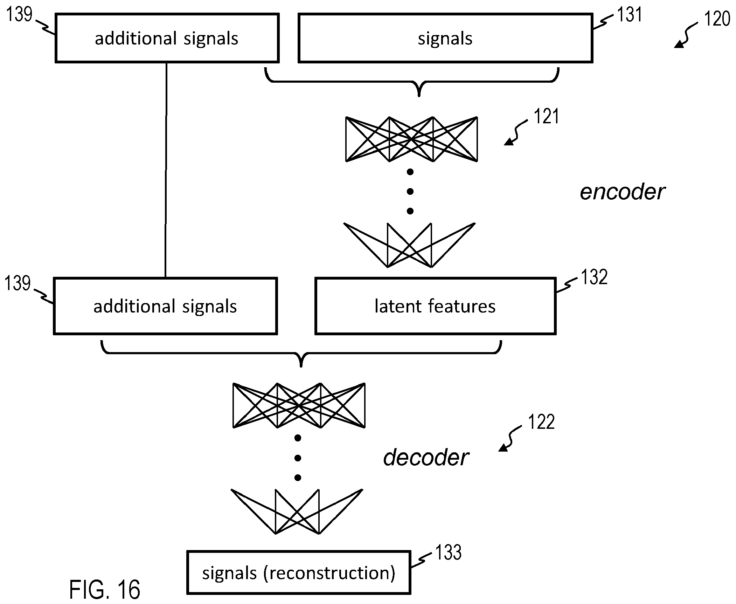

As explained with reference to Figures 7 and 9, and as further explained below, a feature engineering in which latent features are separated in accordance with associated timescales may be attained by treating signals differently, depending on the typical scales on which they vary. For illustration, for physical assets that are power system assets, voltages and/or currents may vary on one timescale, while parameters such as ambient conditions (that may depend on weather or time of day, such as time-dependent load changes) vary on a slower timescale. The latter parameters may also be referred to as "external" parameters, because they live independently from the existence of the physical asset. This is in contrast to signals that are coming out of or are directly related to the existence of the physical asset. These two types of signals may be treated differently, as explained in association with Figures 7 and 9 and as further explained in association with Figures 16 to 19. One, several, or all of the signals that live independently from the existence of the physical asset and that are available for ML model training may be used as the additional signals 139, at least some of which are used as decoder inputs of the decoder 122 during training. One, several, or all of the signals that live independently from the existence of the physical asset may also be included in the encoder inputs of the encoder 121.

The additional signals 139 may, thus, be or comprise external signals which live independently from the existence of the asset. For the example of a wind turbine, e.g. the wind speed and direction are external signals, while the active power generated by the wind turbine is a signal that is directly dependent on the existence of the physical asset.

In order to facilitate selecting a low-dimensional latent representation, the external signals and measurements that are dependent on the existence of the physical asset may be treated differently. The external signals to the decoder 122 as well. Thus, the autoencoder 120 can focus on representing the information which is indicative of the asset behavior in the latent representation and does not need to include any information which cannot be indicative of the asset behavior (since it belongs to the external signals) in the code 132.

Additionally or alternatively, it is possible to focus, for a given ML model, on a single failure mode or a restricted set of failure modes. Domain knowledge may be used to determine which of the signals 131 that are dependent on the physical asset may be indicative of a targeted failure mode(s). The focus of the autoencoder can be further improved and/or the latent dimension may be reduced, by enforcing the decoder 122 to only decode these relevant signals. I.e., the number of output nodes of the decoder 122 may be selected in dependence on which one or which one(s) of the signals 131 that are dependent on the existence of the physical asset are considered to be particularly relevant. This architecture is illustrated in Figure 16.

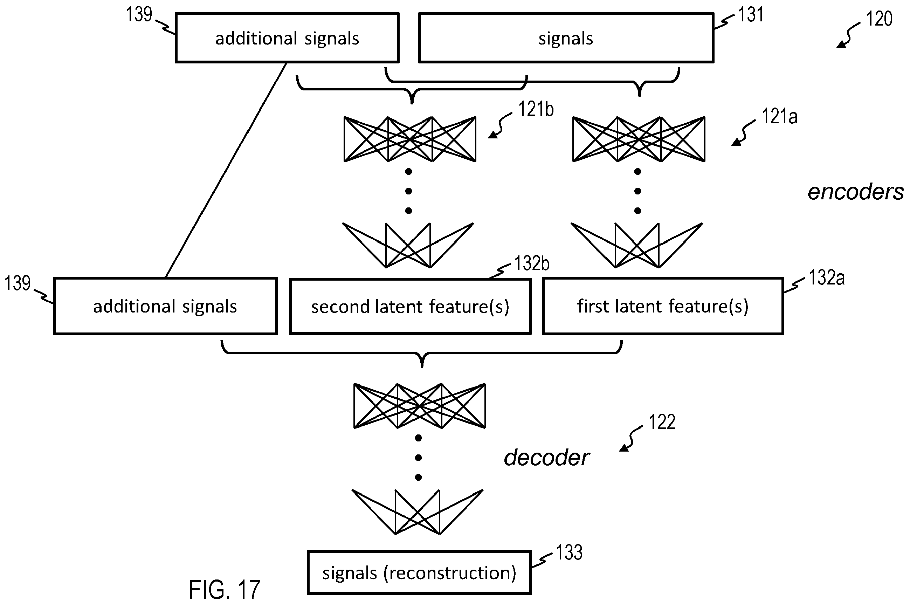

Figure 17 shows a further architecture in which several ANNs 121a, 121b are included as encoders. The several ANNs may be or may comprise RNNs. The several ANNs 121a, 121b may be trained concurrently, but weights of the several ANNs 121a, 121b may be adjusted independently from each other in the training. Several groups of latent features 132a, 132b are provided by the ANNs 121a, 121b. The groups 132a, 132b may be used, in combination with signals 139 that live independently of the existence of the physical asset, to provide the decoder input of the decoder 122 during ML model training.

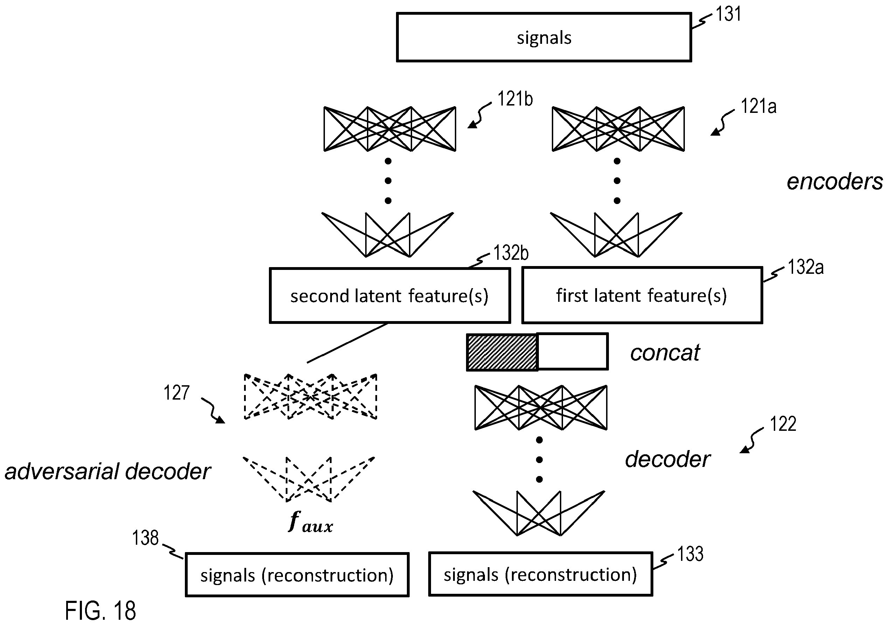

Figure 18 shows a further architecture in which an adversarial decoder 127 is provided. The ML model with one or several encoders 121a, 121b and the adversarial decoder 127 are trained so as to minimize the composite objective function, which may have a form as described in association with Eq. (3).

The adversarial decoder 127 and the encoders 121a, 121b and decoder 122 may be trained in an iterative process, respectively with the objective of minimizing the composite objective function. Training may comprise adjusting weights and/or other parameter values (such as biases of a GRU or LSTM). The objective functions used in the steps of the training may be implemented as described above.

The training steps may employ techniques such as gradient descent, without being limited thereto.

As shown in Figure 18, the adversarial decoder 127 may receive, as decoder input, only a subset of the latent features (e.g., latent features 132b) generated by the encoder(s) 121a, 121b. For illustration, only latent features 132b associated with a slower timescale may be selectively provided to the adversarial decoder 127. The decoder 122 may additionally receive, as decoder inputs, also latent features 132a associated with a different timescale.

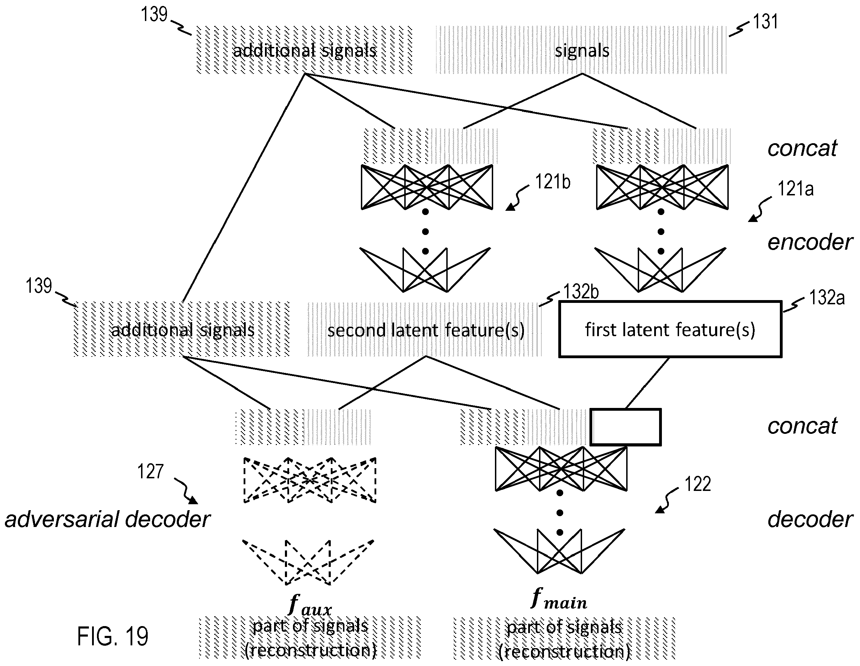

Figure 19 shows an architecture which combines the different treatment of external signals that live independently of the existence of the physical asset (such as ambient conditions of an electric power system) and signals that exist only because of the physical asset (such as currents, voltages, power(s), etc. measured on or in association with the physical asset), and adversarial training techniques.

During adversarial training, the decoder 122 may receive first latent features 132a associated with one timescale and second latent features 132b associated with a different timescale and the external signals 139 that exist independently of the existence of the physical asset.

During adversarial training, the adversarial decoder 126 may only a subset of the latent features (e.g., latent features 132b), which may be selected in dependence on the characteristic timescale over which the latent features vary, and the external signals 139 that exist independently of the existence of the physical asset.

The adversarial training may be performed as described in more detail above. For illustration, a composite objective function may be minimized in the adversarial training, comprising adjusting weights of the encoder(s) 121a, 121b, so as to reduce or minimize the composite objective function explained with reference to Equations (3)-(5).

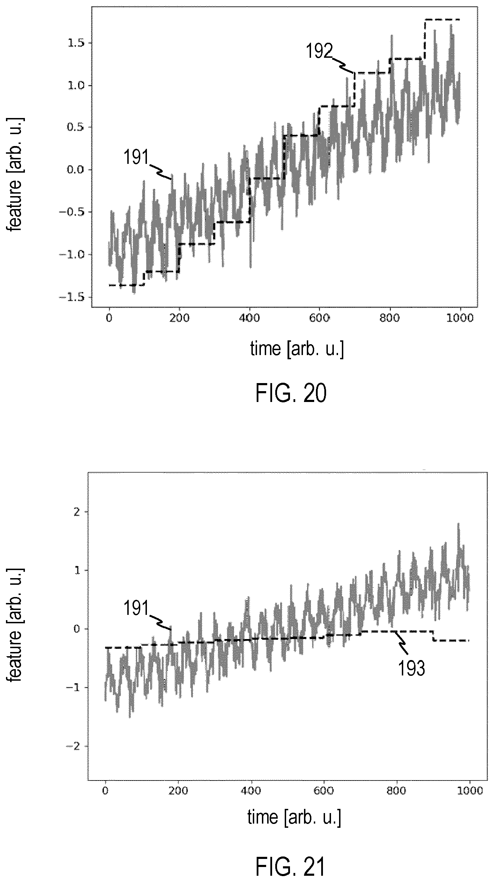

Figures 20 and 21 illustrate a method in which features are auto-engineered using adversarial ML model training (Figure 20) in comparison to a conventional technique (Figure 21). The ML model training is performed with a data set in which the external signals are sampled as 3-dimensional standard normally distributed random variables over $T = 1000$ time steps. A one-dimensional true latent signal is generated by superimposing a linear trend (the slow evolving part which is supposed to be retrieved), a high frequency sine wave, and Gaussian noise. From the input and the linear trend (which represents the latent signal to be identified), a 5-dimensional output signal is generated by a random linear mapping. The input and the output constitute the input of the autoencoder which has one dynamic and one static latent feature. The signal to be reconstructed is the autoencoder output.

The results with adversarial training (Figure 20) show that the linear trend is captured by the static latent feature, but much less so without adversarial training (Figure 21), where instead the full information is represented in the dynamic latent feature.

In this simple example used to demonstrate the concept, the linear trend would have been even visible with the bare eye, both in the dynamic latent feature shown in Figure 20 and in the 5-dimensional autoencoder input (not shown in Figures 20 and 21).

In real applications, often similar slow trends will not be so clearly apparent in the input signals as faster dynamics will dominate. Furthermore, the slow trends need not be a linearly increasing function, but may be more complex, non-monotonic multi-variate, and/or dynamic (i.e. visible only when considering multiple time steps together) in nature. In this case, the proposed invention will be well suited at extracting these more complex, slowly developing trends.

In all of the methods, computing systems, and systems disclosed herein that employ an adversarial loss, the adversarial loss need not be a reconstruction loss (as exemplarily explained with reference to Equations (4) and (5)). Different variants of the adversarial loss can be employed instead of the reconstruction loss. This list is not exhaustive. Note that any combination (linear combination, weighted average, etc.) of the variants listed can be employed, too.

(i) The adversarial loss does not need to be a reconstruction loss with respect to the signals to be reconstructed, but may quantify a deviation of the second (adversarial) decoder 127 output and the output of the decoder 122.

For illustration, the adversarial loss may be a reconstruction loss, which may be equal to or may include

$$\sum_{i=1}^{\tilde{I}_{E,aux}} \left\| r_{aux,i}(t) - r_i(t) \right\| \qquad (6)$$

where i is a label for the encoder input signals, $s_i$ designates encoder input signals of the second ML model part 125, $r_{aux,i}$ designates decoder output signals of the decoder 127, $r_i(t)$ designates decoder output signals of the decoder 122, and $\|\cdot\|$ designates a norm, such as a metric. Other distance measures may be used, such as entropy or entropy-based measures. t is one of the sampling times.

The number of signals $\tilde{I}_{E,aux}$ output by the adversarial decoder 127 may be different from the number of signals $I_E$ output by the decoder 122 during training. For illustration, only a sub-set of the signals that is reconstructed by the autoencoder 120 during training may be reconstructed by the second ML model part 125.

The adversarial loss may be a reconstruction loss, which may be equal to or may include

$$\sum_{j=1}^{J} \sum_{i=1}^{\tilde{I}_{E,aux}} \left\| r_{aux,i}(t) - r_i(t) \right\| \qquad (7)$$

where $t_j$ is a sampling time and J is a number of sampling times. Autoencoder inputs may be available at times spaced in the time domain by a constant or varying sampling interval.

(ii) For determining the reconstruction loss (irrespective of whether it is determined for the decoder 122 or for the second decoder 127), a distance / divergence measure of probability distributions may be used, e.g. Kullback-Leibler divergence, Maximum Mean Discrepancy, Wasserstein distance, or other.

(iii) Instead of formulating the adversarial training criterion on a second decoder 127, a criterion on the probability distribution of the dynamic latent features may be used. By implementing some statistical test for stationarity such as Dickey-Fuller, stationarity of the dynamic features can be promoted. Alternatively or additionally, the dynamic features may be regularized towards a prior given or during the training to-be-determined probability distribution.

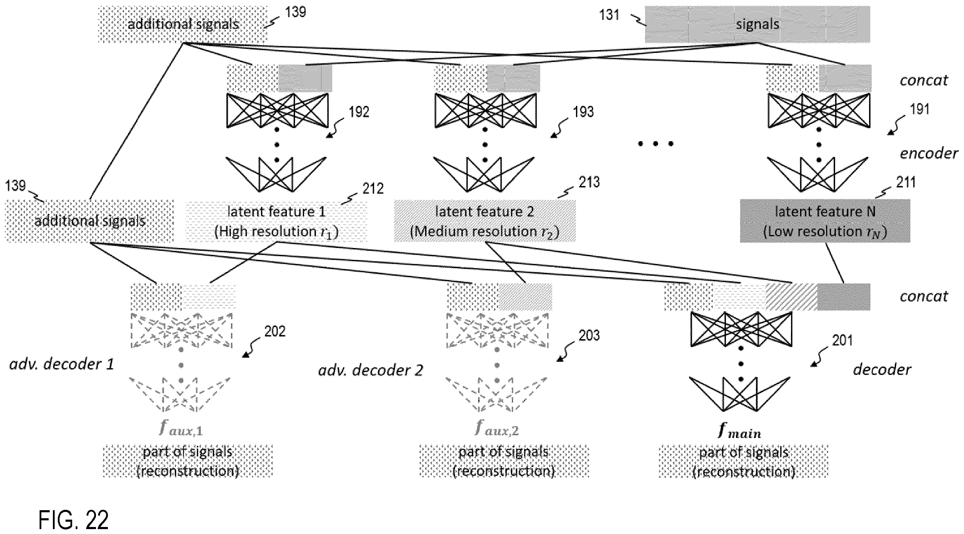

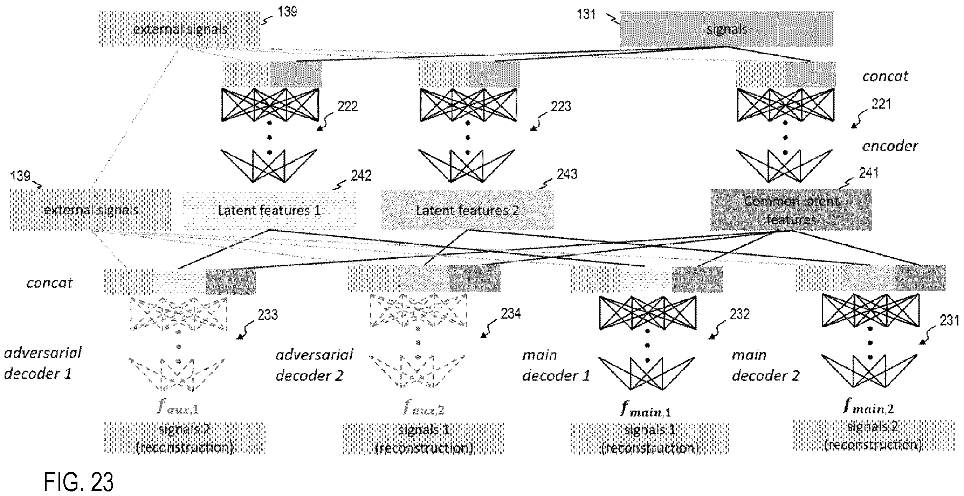

The autoencoder architectures are not limited to the architectures discussed in association with Figures 1 to 21. Modifications and alterations may be implemented, some of which are discussed in association with Figures 22 and 23.

Figure 22 shows an autoencoder architecture having an encoder operative to generate more than two groups 211-213 of latent features. The autoencoder may have an encoder comprising more than two ANNs 191-193 to generate the groups of latent features 211-213. More than three groups of latent features may be generated.

All of the latent features may be processed by a decoder 201 of the autoencoder that is to be trained. Only the latent features of a sub-set of the groups 211-213 may be processed by adversarial decoders 202, 203.

External signals that exist independently of the physical asset (such as signals indicative of ambient conditions or load) may be fed to both the various encoders 191-193, the decoder 201, and the adversarial decoder(s) 202, 203. The number of adversarial decoders 202, 203 may be equal to the number of groups 211-213 minus one. Each of the adversarial decoders 202, 203 may be associated with a different timescale, spatial scale, spatio-temporal scale, or logical hierarchy level.

The number of main decoders (e.g., decoders that receive more latent features than adversarial decoders) may be greater than one. The number of adversarial decoders may be greater than one.

Figure 23 shows an architecture having two or more main decoders 231, 232 and two or more adversarial decoders 233, 234. The main decoders 231, 232 and adversarial decoders 233, 234 may all receive, as decoder inputs, common latent features 241 generated by an encoder 221.

At least the main decoder stages 231, 232 may receive, as decoder inputs, latent features 242, 243 generated by additional encoders 222, 223.

Adversarial decoders 233, 234 may receive at least the external signals 139 and the common latent features 241 as inputs. Each adversarial decoder 233, 234 may selectively receive latent features included in one group 242, 243 of latent features or in a sub-set of all available groups of latent features.

Each decoder stage 231-234 (main or adversarial) may bet set up to reconstruct all signals or just a selected subset of signals.

While the ML model may be trained to enforce a separation of latent features in accordance with timescales (which is suitable to detect slowly evolving trends), alternative or additional targets of the automatic feature engineering may be achieved. The following is a non-exhaustive list of some possibilities:

(i) A separation of three or more timescales may be achieved by setting up two or more adversarial decoder stages (shown in Figure 22).
(ii) A different separation, e.g. separation in space, or by subsystem / logical separation, may be achieved e.g. by setting up multiple main and adversarial decoder stages and associating subsets of the signals to the decoder stages according to spatial location / subsystem affiliation. Figure 23 shows an example where to latent features for two spatial / logical areas a constructed such that the first constructed feature set is trained to represent the information in the first set of signals, but not in the second set of signals. Conversely, the second constructed feature set is trained to represent the information in the second set of signals, but not in the first set of signals. This formulation does not need a temporal setup, i.e. time need not be a dimension of the data here.

At least one encoder of the trained ML model may be used as (part of) a signal processing logic. When the autoencoder architecture has more than one encoder (as illustrated in Figures 17-19, 22, and 23), a selected one of the encoders that provides latent features associated with a desired timescale (e.g., latent features evolving over a timescale that is slow compared to grid frequency), a desired geographical area (e.g., a given substation), or a desired hierarchical level (e.g., voltage or bay level) may be deployed for use in the signal processing logic.

The signal processing logic may include additional pre- and/or post-processing components. A pre-processing logic may condition signals prior to them being inputted to the input layer of the encoder of the trained ML model. The pre-processing logic may comprise filters (e.g., high, low, or band pass filters), may be operative to process several measurements into an input signal of the encoder (e.g., computing a conductance, impedance, or admittance from several measurements), or may perform other counters. Generally, the pre-processing logic may be operative to perform signal conditioning during field use of the encoder.

The post-processing logic may be operative to process a trend represented by one or several latent features of the encoder. The post-processing logic may perform feature conditioning operations (such as filtering). The post-processing logic may be operative to process the latent feature output by the encoder during field use, to identify a deterioration in asset health, a general trend in asset health, etc. The post-processing logic may include a predictive component operative to predict, over a future time horizon and based on a past time evolution of at least one latent feature, whether and/or when safety margins of asset operation may be reached. Preventive warning and/or mitigating actions may be taken based thereon. The post-processing logic may be operative to process the latent feature(s) by comparing them to safety margin(s) that define safe, critical, and, optionally, a failed state of the asset.

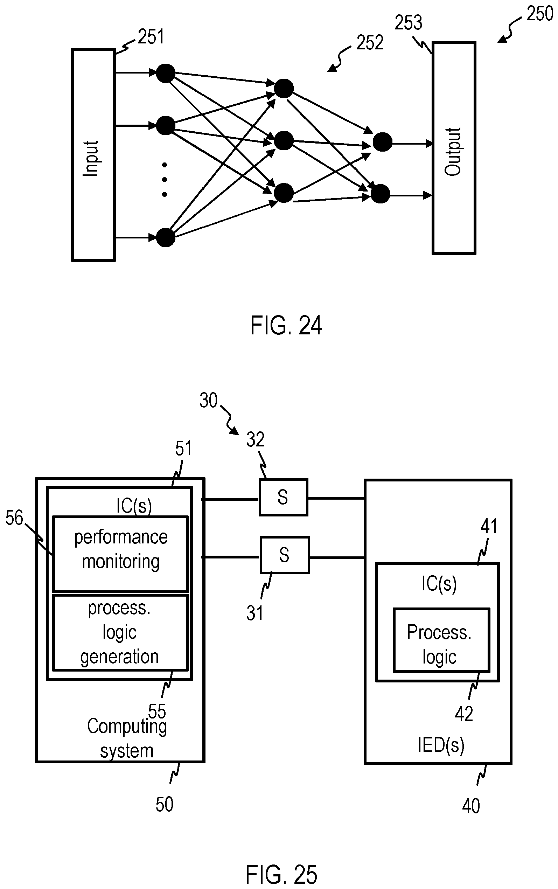

Figure 24 is a diagram of a signal processing logic that comprises a machine learning model, in particular an ANN 252, that is the encoder part of an autoencoder trained using the techniques disclosed herein. The ANN 252 may be a RNN. The ANN 252 may comprise a LSTM or GRU, without being limited thereto.

The ANN 252 has an input layer 251. The input layer 251 is operative to receive measurements. The measurements may comprise measurements of electrical or other characteristics that depend on the physical asset. The measurements may comprise voltage, current, and/or power measured on the physical asset or conductors connected thereto. The measurements may comprise non-electrical measurements, such as gas concentrations (e.g., for dissolved gas analysis) and/or temperature measurements.

The ANN 252 has an output layer 253. The output layer 253 may provide one or several latent features. The one or several latent features may be indicative of slowly evolving trends in physical asset condition. The one or several latent features may be indicative of a trend as a function of location and/or logical association.

Control decisions, such as the automatic operation of a power system component, and/or user interface control may be taken automatically, depending on the values output by the output layer 253. The output layer 253 may, thus, provide control signals operative for operating a power system component, a user interface, triggering a physical operation, or other action associated with the physical asset in the power system.

The techniques disclosed herein may be used to monitor and update a signal processing logic during field use. The data used to train the autoencoder may include measurements captured during field use of the physical asset. Training of the autoencoder may be continued, using the measurements captured during field use, once the signal processing logic including at least one encoder has been deployed. The signal processing logic may be selectively updated, using an updated version of the at least one encoder that is obtained by continued training in parallel with field operation of the physical asset and signal processing logic.

Figure 25 shows a diagram of a system 30 that comprises the IED 40 and a computing system 50. The IED 40 comprises one or several IC(s) 41 executing the signal processing logic 42. The signal processing logic 41 may comprise at least one encoder of a trained ML model, which may be generated as disclosed herein.

Measurements captured during field use of the physical asset using sensor(s) 31, 32 may be processed by the IED 40 for performing control, monitoring, and/or analysis functions.

Measurements captured during field use of the physical asset using sensor(s) 31, 32 may also be used by the computing system 50 to continue ML model training and/or for performance monitoring 56. Based on a result of the performance monitoring 56, which identifies whether the signal processing logic 42 is to be updated, a new signal processing logic generated by the signal processing logic generation 55 may be deployed to the IED 40. In this manner, the signal processing logic of the IED 40 may be updated during field use.

Figures 26 and 27 show further examples of signal processing logics that may include an encoder of a trained ML model.

In addition or alternatively to using an encoder of the trained ML model as (part of) a signal processing logic, the decoder of the trained ML model may also be used.

Figure 29 is a flow chart of a method 270 in which, at step 271, signals (which may be online or offline signals) are processed using a signal processing logic that includes or is otherwise based on the decoder. Signal processing at step 271 may comprise performing an anomaly detection. An asset health indicator (or other latent variable) may be artificially varied, and the loss function (e.g., reconstruction loss or prediction loss) may be analyzed or the reconstruction may be analyzed at step 272. At step 273, a control operation is performed based on a result of the analysis at step 272.

The methods for generating the signal processing logic are embodied in a computer implemented system. The (adversarial) training process may be used for automatic feature engineering of data recorded from one or more assets.

The trained ML models (or at least one encoder thereof) can be used to analyze data offline or online, where "online" means that the trained ML model is continuously or at regular or irregular time intervals evaluated on new data recorded from the asset(s).

The trained ML models can be used for analyzing data, monitoring assets by analyzing and/or evaluating the diagnostic output of the autoencoder, which may be constituted by any subset of the latent features, the reconstruction loss or any other signal derived from the reconstruction, or features further derived by from the output of the autoencoder by a subsequent computation.

The methods, devices, computing systems, and systems according to embodiments may be used to generate diagnostic output, which may be output via a UI or analyzed automatically by another computer implemented system.

The methods, devices, computing systems, and systems according to embodiments may be used for offline generation (pre-training) of features for monitoring, online application for monitoring, diagnostics, prognostics etc. The evolution of the diagnostic output is monitored online, may be output via a UI or analyzed automatically by another computer implemented system for tracking the asset performance, taking operational and/or maintenance decisions, raising alarms, etc.

The methods, devices, computing systems, and systems according to embodiments may be used for online training or re-training of the signal processing logic, for keeping the signal processing logic up to date with the changes in asset behavior, and online use of the diagnostic output as describe before.

The methods, devices, computing systems, and systems according to embodiments may be used for implementing a digital twin of a system (e.g., an electric power system) comprising an IED executing a signal processing logic. When a signal processing logic that includes or is based on at least one encoder of the trained ML model is deployed to an IED, the digital twin may be modified accordingly in an automated manner. When a signal processing logic that includes or is based on at least one encoder of the trained ML model is updated in an IED, the digital twin may be updated accordingly in an automated manner.

Methods, systems, and devices disclosed herein provide techniques for enhanced monitoring, control, and/or analysis of physical assets. Features that are used for performing the monitoring, control, and/or analysis operations are engineered automatically using ML model training, which may optionally include adversarial training.

No manual or expert knowledge is required in order to engineer features from a potentially large number of different measurements, which may be time-dependent. The arduous task with the possibility of sub-optimal feature engineering, which is likely to be encountered with human engineered features, is improved using the techniques disclosed herein.

While embodiments may be used for power system protection, the embodiments are not limited thereto.

**Claims**

1. A method of generating or updating a signal processing logic for processing signals, in particular time-series signals, that comprise measurements associated with a physical asset, the method comprising the following steps performed using at least one integrated circuit:

   training a machine learning, ML, model, wherein the ML model comprises:

   a first encoder having a first input layer to receive input signals, in particular time-series input signals, the first encoder being operative to generate a first code comprising first latent features,
   at least one second encoder having at least one second input layer to receive the input signals, the at least one second encoder being operative to generate at least one second code comprising second latent features,
   a first decoder having an output layer, the first decoder being operative to process first decoder inputs to generate a first decoder output, and
   at least one second decoder having at least one second output layer, the at least one second decoder being operative to process second decoder inputs to generate a second decoder output,

   wherein training the ML model comprises providing training signals as the input signals to the first input layer and the second input layer, generating the first decoder inputs from at least some first latent features included in the first code, and generating the second decoder inputs from at least some second latent features included in the at least one second code, and
   providing at least one of the first or second encoders and/or at least one of the first or second decoders of the trained ML model as at least part of a signal processing logic to a device that executes the signal processing logic to control, monitor, and/or analyze the physical asset.

2. The method of claim 1, wherein generating the first decoder inputs comprises generating the first decoder inputs from the first code and from additional signals that comprise at least some second latent features included in the at least one second code.

3. The method of claim 1 or claim 2, wherein the first latent features and the second latent features vary on different time scales, and/or wherein the first latent features vary over a slower time scale than at least some of the second latent features.

4. The method of any one of the preceding claims, wherein training the ML model comprises performing an iterative training comprising several iterations, each of the several iterations respectively comprising:

   training the first encoder, the first decoder, and the at least one second encoder with objectives of minimizing a loss function, in particular a reconstruction loss, of the first decoder and maximizing a loss function, in particular a reconstruction loss, of the at least one second decoder,
   training the at least one second decoder with an objective of minimizing a loss function, in particular a reconstruction loss, of the at least one second decoder.

5. The method of any one of the preceding claims, wherein the ML model comprises at least one autoencoder and/or wherein the first decoder outputs comprise a first reconstruction of at least some of the input signals and/or wherein the second decoder outputs comprise a second reconstruction of at least some of the input signals.

6. The method of any one of the preceding claims when dependent on claim 2, wherein the additional signals comprise variables that influence operation of the physical asset but exist independently of the presence or absence of the physical asset, and/or wherein the additional signals comprise variables measured at a first sampling time that is longer than a second sampling time at which the measurements are sampled.

7. The method of any one of the preceding claims when dependent on claim 2, wherein the additional signals comprise ambient condition variables of the physical asset, optionally wherein the ambient condition variables comprise weather data that affect at least one power system characteristic associated with the physical asset.

8. The method of any one of the preceding claims, wherein the first decoder inputs comprise replicas of at least some of the second latent features included in the at least one second code.

9. The method of any one of the preceding claims, wherein one or several of the first latent variables represent temporal characteristics relating to the physical asset, optionally wherein the one or several first latent variables of the trained first encoder represent temporal characteristics that vary over a first timescale that is longer than sampling time intervals of one, several, or all of the measurements.

10. The method of claim 9, wherein the first timescale is a sub-sampling of the sampling time intervals.

11. The method of any one of the preceding claims, wherein the device processes one or several of the first latent variables to perform an asset health analysis for the physical asset.

12. A method of controlling, analyzing, and/or monitoring a physical asset, in particular a power system asset, the method comprising:

   executing, by a control, analysis, and/or monitoring device the signal processing logic generated by the method according to any one of the preceding claims, wherein the signal processing logic processes signals, in particular time-series signals, that comprise measurements associated with the physical asset; and
   performing, by the control, analysis, and/or monitoring device, at least one control operation based on one or several of the latent features;
   optionally wherein the at least one control operation comprises one or several of: triggering a protection function, controlling an interface to perform an output operation, controlling at least one operation parameter of the physical asset, controlling at least one operation parameter of a power system asset different from the physical asset.

13. A method of automatically engineering features for controlling, analyzing, and/or monitoring a physical asset, the method comprising:

   using the method of any one of claims 1 to 11 to engineer features into which measurements are processed for controlling, analyzing, and/or monitoring a physical asset.

14. A control, analysis, and/or monitoring device for a physical asset, in particular for a power system asset, comprising:

   an interface to receive signals, in particular time-series signals, that comprise measurements associated with the physical asset; and
   at least one integrated circuit operative to

      process the signals using an encoder of a trained machine learning, ML, model, in particular of a trained autoencoder, wherein the encoder has an input layer to receive the signals, the encoder being operative to generate a code comprising latent features, and/or process the signals using a decoder, in particular a decoder of a trained autoencoder; and
      perform at least one control operation based on one or several of the latent features or based on a decoder output of the decoder.

15. An electric power system, comprising:

   a physical asset;
   at least one measurement device operative to capture signals associated with the physical asset; and
   the control, analysis, and/or monitoring device according to claim 14 for processing the captured signals, optionally wherein the control, analysis, and/or monitoring device is an Intelligent Electronic Device, IED.

FIG. 1

FIG. 2

```
                                                    ⟋ 100
┌─────────────────────────────────────┐  ⟋ 101  ↙
│     Performing ML model training    │
└─────────────────────────────────────┘
                   │
                   ▼
┌─────────────────────────────────────┐  ⟋ 102
│             Validation              │
└─────────────────────────────────────┘
                   │
                   ▼
┌─────────────────────────────────────┐  ⟋ 103
│     Using encoder and/or decoder    │
│    as (part of) signal processing logic │
└─────────────────────────────────────┘
```

FIG. 3

```
                                                    ⟋ 110
┌─────────────────────────────────────┐  ⟋ 111  ↙
│       Receiving time-series signal  │
└─────────────────────────────────────┘
                   │
                   ▼
┌─────────────────────────────────────┐  ⟋ 112
│  Processing using encoder and/or decoder │
│          of trained ML model        │
└─────────────────────────────────────┘
                   │
                   ▼
┌─────────────────────────────────────┐  ⟋ 113
│ Control, monitor, and/or analysis operation │
│      based on latent feature(s) in code │
└─────────────────────────────────────┘
```

FIG. 4

131

| signals |

123

encoder

132

| latent features |

122

decoder

124

133

| Signals (reconstruction) |

FIG. 5

115

116

| Initiating training |

117

| Different treatment of latent feature(s) based on temporal and/or spatial charact. |

118

| Control, monitor, and/or analyze operation based on latent feature(s) in code |

FIG. 6

131

Signals incl.
measurements

120

encoder
121

139

Additional signals

latent features 1
132

122

decoder

$f_{main}$

signals (reconstruction)
133

FIG. 7

FIG. 8

EP 4 231 198 A1

FIG. 9

FIG. 10

FIG. 11

FIG. 12

FIG. 13

FIG. 14

FIG. 15

FIG. 16

EP 4 231 198 A1

EP 4 231 198 A1

FIG. 17

FIG. 18

FIG. 19

FIG. 20

FIG. 21

FIG. 22

FIG. 23

251

252

253

250

Input

Output

FIG. 24

30

32

51

S

56

IC(s)

performance
monitoring

process.
logic
generation

31

S

41

IC(s)

Process.
logic

42

55

Computing
system

IED(s)

50

40

FIG. 25

FIG. 26

FIG. 27

260

| Retrieving first and second sets of latent features | 261 |

↓

| Replicating latent features included in second set | 262 |

↓

| Concatenation | 263 |

FIG. 28

270

| Processing signals using decoder | 271 |

↓

| Analyzing reconstruction and/or reconstruction loss | 272 |

↓

| Analysis, monitoring, and/or control operation | 273 |

FIG. 29

**EUROPEAN SEARCH REPORT**

Application Number

EP 22 15 7648

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG WENQIAN ET AL: "Intermediate fused network with multiple timescales for anomaly detection", NEUROCOMPUTING, ELSEVIER, AMSTERDAM, NL, vol. 433, 30 December 2020 (2020-12-30), pages 37-49, XP086500521, ISSN: 0925-2312, DOI: 10.1016/J.NEUCOM.2020.12.025 [retrieved on 2020-12-30] * abstract * * chapters 1-5; page 37 - page 47; figures 1-8; tables 1-14 * | 1-15 | INV. G06N3/04 G06N3/08 |
| X | BINHANG YUAN ET AL: "WaveletAE: A Wavelet-enhanced Autoencoder for Wind Turbine Blade Icing Detection", ARXIV.ORG, CORNELL UNIVERSITY LIBRARY, 201 OLIN LIBRARY CORNELL UNIVERSITY ITHACA, NY 14853, 14 February 2019 (2019-02-14), XP081499045, * abstract * * Chapters 1-6; page 1 - page 8; figures 1-2; tables 1-3 * | 1-15 | |

TECHNICAL FIELDS SEARCHED (IPC)

G06N

-/--

The present search report has been drawn up for all claims

| Place of search | Date of completion of the search | Examiner |
|---|---|---|
| The Hague | 25 August 2022 | Hasnas, Sergiu |

EPO FORM 1503 03.82 (P04C01)

page 1 of 2

# EUROPEAN SEARCH REPORT

Europäisches
Patentamt
European
Patent Office
Office européen
des brevets

**Application Number**

EP 22 15 7648

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LUBBERING MAX ET AL: "Decoupling Autoencoders for Robust One-vs-Rest Classification", 2021 IEEE 8TH INTERNATIONAL CONFERENCE ON DATA SCIENCE AND ADVANCED ANALYTICS (DSAA), IEEE, 6 October 2021 (2021-10-06), pages 1-10, XP033991581, DOI: 10.1109/DSAA53316.2021.9564136 [retrieved on 2021-10-07] * abstract * * chapter III; page 3 - page 4; figures 2-4 * ----- | 4 | |
| A | US 2021/125076 A1 (ZHANG ETHAN [US] ET AL) 29 April 2021 (2021-04-29) * abstract * * paragraph [0125] - paragraph [0153]; figures 1, 6 * ----- | 6,7 | |

**TECHNICAL FIELDS SEARCHED** (IPC)

The present search report has been drawn up for all claims

| Place of search | Date of completion of the search | Examiner |
|---|---|---|
| The Hague | 25 August 2022 | Hasnas, Sergiu |

EPO FORM 1503 03.82 (P04C01)

## ANNEX TO THE EUROPEAN SEARCH REPORT
## ON EUROPEAN PATENT APPLICATION NO.

EP 22 15 7648

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2022

| Patent document cited in search report | Publication date | Patent family member(s) | Publication date |
|---|---|---|---|
| US 2021125076 A1 | 29-04-2021 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019141856 A1